(19) **Europäisches Patentamt**

**European Patent Office**

**Office européen des brevets**

(11) **EP 1 407 586 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(21) Anmeldenummer: **02748575.4**

(22) Anmeldetag: **07.06.2002**

(51) Int Cl.:
**H04L 25/02** (2006.01)

(86) Internationale Anmeldenummer:
**PCT/DE2002/002090**

(87) Internationale Veröffentlichungsnummer:
**WO 2003/009553 (30.01.2003 Gazette 2003/05)**

(54) **LEITUNGSTREIBER ZUR DIGITALEN SIGNALÜBERTRAGUNG**

LINE DRIVER FOR DIGITAL SIGNAL TRANSMISSION

CIRCUIT D'ATTAQUE DE LIGNE POUR LA TRANSMISSION DE SIGNAUX NUMERIQUES

(84) Benannte Vertragsstaaten:
**GB**

(30) Priorität: **19.07.2001 DE 10135113**

(43) Veröffentlichungstag der Anmeldung:
**14.04.2004 Patentblatt 2004/16**

(73) Patentinhaber: **Infineon Technologies AG**
**81669 München (DE)**

(72) Erfinder: **GREGORIUS, Peter**
**81476 München (DE)**

(74) Vertreter: **Graf Lambsdorff, Matthias et al**
**Patentanwälte**
**Lambsdorff & Lange**
**Dingolfinger Strasse 6**
**81673 München (DE)**

(56) Entgegenhaltungen:
**EP-A- 1 039 702        US-A- 6 028 479**

**Beschreibung**

Die Erfindung bezieht sich auf Leitungstreiber. Insbesondere betrifft die Erfindung einen pseudo-differentiellen Leitungstreiber zur digitalen Signalübertragung.

Um digitale Signale von einem integrierten Schaltkreis zu einem weiteren integrierten Schaltkreis unverfälscht zu übertragen, muss sichergestellt werden, dass die Verbindungsleitungen die Signale nicht beeinträchtigen. Der Einfluss der Verbindungsleitungen kann nicht vernachlässigt werden, falls bei steilen Signalflanken die Laufzeit durch die Verbindungsleitungen mindestens in der Größenordnung der Anstiegszeit des Schaltkreises liegt. Ein einfacher Verbindungsdraht zwischen den Schaltkreisen ist in diesem Fall nicht mehr ausreichend. Um schwerwiegende Signalverformungen zu vermeiden, werden Leitungen mit definiertem Wellenwiderstand eingesetzt, die mit ihrem Wellenwiderstand abgeschlossen werden. Häufig werden dazu zwei isolierte Drähte verwendet, die miteinander verdrillt sind. Derartige Leitungen werden Twisted-Pair-Leitungen genannt. Eine Twisted-Pair-Leitung mit ca. 100 Windungen pro Meter weist einen Wellenwiderstand von ca. 110 Ω auf. Wegen des niederohmigen Abschlusswiderstands muss der Sender einen entsprechend hohen Ausgangsstrom liefern. Um diese Anforderung zu erfüllen, werden Leitungstreiber als Sender bzw. Treiber eingesetzt. Zur störunanfälligen Signalübertragung werden Leitungstreiber häufig so konfiguriert, dass sie die beiden Drähte der Twisted-Pair-Leitungen mit symmetrischen, komplementären Signalen speisen. Als Empfänger wird ein Komparator verwendet. Die Information wird bei dieser Betriebsart durch die Polarität des Differenzsignals und nicht durch den absoluten Wert des Pegels bestimmt. Ein Störimpuls bewirkt hierbei lediglich eine Gleichtaktaussteuerung, die wegen der Differenzbildung im Komparator wirkungslos bleibt.

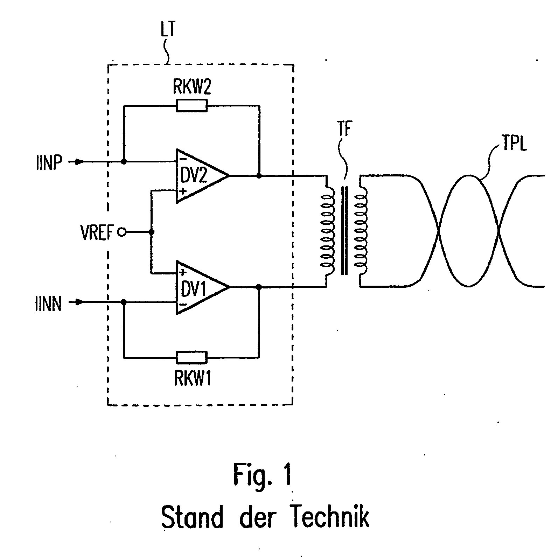

In Fig. 1 ist ein pseudo-differentieller Leitungstreiber LT dargestellt. Der pseudo-differentielle Leitungstreiber LT weist Differenzverstärker DV1 und DV2 auf. Die invertierenden Eingänge der Differenzverstärker DV1 bzw. DV2 werden von Eingangsströmen IINN und IINP gespeist. Die Eingangsströme IINN und IINP treten pulsförmig auf und beinhalten die zu übermittelnde Information. Die Eingangsströme IINN und IINP sind in ihren zeitlichen Charakteristiken sowie dem Betrag ihrer Amplituden identisch, sie unterscheiden sich lediglich durch unterschiedliche Vorzeichen. Die nicht-invertierenden Eingänge der Differenzverstärker DV1 und DV2 sind mit einer Referenzspannung VREF beaufschlagt. Die Differenzverstärker DV1 und DV2 sind als Strom-Spannungs-Umsetzer mit Rückkoppelwiderständen RKW1 und RKW2 beschaltet. Die Ausgänge der Differenzverstärker DV1 und DV2 speisen eine externe Last in Form eines Transformators TF und einer Twisted-Pair-Leitung TPL. Dazu liegen die primärseitigen Eingänge des Transformators TF an den Ausgängen der Differenzverstärker DV1 und DV2 an, sodass der Transformator TF die Signale an die ihm nachgeschaltete Twisted-Pair-Leitung TPL übermitteln kann.

Bei der Übertragung digitaler Signale über ein Kabel kommt den Schnittstellen zwischen den einzelnen Übertragungselementen, den sogenannten Line Interface Units, eine besondere Bedeutung zu. Ein wesentliches Übertragungselement ist dabei der Leitungstreiber. Besonders bei variablen Kabellängen bereitet es Schwierigkeiten, hohen Anforderungen an die Linearität und Geschwindigkeit bzw. Bandbreite bei gleichzeitiger Einhaltung der Pulsmasken des verwendeten Standards zu genügen.

Die meisten herkömmlichen Leitungstreiber basieren auf einer Spannungsverarbeitung des Signals, d.h. ein Spannungssignal liegt über der externen Last an. Diesen Leitungstreibern liegen oftmals Shunt-Shunt-Feedback- oder Series-Shunt-Feedback-Systeme zugrunde. Bei einem Shunt-Shunt-Feedback-Sytem liegt die Eingangssignalquelle parallel zum Eingangswiderstand, und das rückgekoppelte Signal ist parallel zur Eingangsstromquelle geschaltet. Demgegenüber ist bei einem Series-Shunt-Feedback-System das rückgekoppelte Signal mit der Eingangssignalquelle in Serie geschaltet.

Herkömmliche Leitungstreiber, bei denen das Signal als Strom durch die externe Last übertragen wird, basieren meist auf Stromspiegelschaltungen. Die wesentlichen Nachteile dieser Leitungstreiber sind eine unzureichende Linearität der Übertragungscharakteristik im niederfrequenten Bereich sowie Verzerrungen im hochfrequenten Bereich. Die Verzerrungen im hochfrequenten Bereich werden durch Miller-Kompensationen (Pole-Splitting), welche zur Stabilisierung notwendig sind, verursacht. Die Miller-Kompensationen reduzieren die Bandbreite des Verstärkers, wodurch die Verzerrungen des hochfrequenten Signals hervorgerufen werden. Eine Kompensation der Verzerrungen führt wiederum zu einer höheren Stromaufnahme.

Weitere Ansätze zur Konzeption von Leitungstreibern basieren auf dem Shunt-Series-Feedback-Prinzip. Sofern diese Leitungstreiber im Wesentlichen auf Stromspiegelkonzepten beruhen, sind unzureichende Linearitäten die Folge. Außerdem besitzen diese Leitungstreiber häufig einen geringen Eingangswiderstand, was einen erhöhten Fehlerstrom sowohl im niederfrequenten als auch im hochfrequenten Signalbereich bewirkt. Weitere häufige Nachteile der auf dem Shunt-Series-Feedback-Prinzip beruhenden Leitungstreiber sind geringe Leerlauf-Schleifenverstärkungen und interne Umwandlungen des Stromeingangssignal in ein Spannungssignal. Dadurch sind diese Leitungstreiber ungeeignet für niedrige Versorgungsspannungen.

Ein weiterer Nachteil aller bisheriger Leitungstreiber ist eine oftmals unzureichende Leistungseffizienz.

In der Veröffentlichung "A 100-MHz, 50-Ω, -45-dB Distortion, 3.3-V CMOS Line Driver for Ethernet and Fast Ethernet Networking Applications" von J. N. Babanezhad, erschienen in IEEE Journal of Solid-State Circuits, Band 34, 1999, S. 1044ff., ist ein pseudo-differentieller Leitungstreiber, bei welchem das Signal als Strom durch die Last erzeugt wird, beschrieben. Der Nachteil dieses Leitungstreibers ist sein hoher Eingangsoffset, der sich daraus ergibt, dass Transistoren unterschiedlichen Typs miteinander abgestimmt werden müssen. Des Weiteren ist dieser Leitungstreiber nicht für Anwendungen mit niedrigen Versorgungsspannungen geeignet.

In der Veröffentlichung "A Differential 160 MHz Self-Terminating Adaptive CMOS Line Driver" von R. Mahadevan und D. A. Johns, erschienen in IEEE Journal of Solid-State Circuits, Dezember 2000, ist ein Leitungstreiber dargestellt, welcher auf dem Shunt-Series-Feedback-Prinzip beruht. Nachteilig an diesem Leitungstreiber ist seine reine Spannungsverarbeitung, sodass der Leitungstreiber an seinem Eingang ein Spannungssignal benötigt.

Ein weiterer Leitungstreiber ist in der Veröffentlichung "A CMOS Transceiver for 10-Mb/s and 100-Mb/s Ethernet" von J. Everitt, J. F. Parker, P. Hurst, D. Nack und K. R. Konda, erschienen in IEEE Journal of Solid-State Circuits, Band 33, 1998, S. 2169ff., beschrieben. Nachteilig an diesem Leitungstreiber ist seine geringe Leistungseffizienz sowie seine unzureichende Linearität.

Die veröffentlichte europäische Patentanmeldung EP 1 039 702 A1 offenbart einen Leitungstreiber gemäß dem Oberbegriff des Anspruchs 1.

Aufgabe der Erfindung ist es daher, einen Leitungstreiber mit einer hohen Linearität sowohl im Gleichspannungsbereich als auch im Hochfrequenzbereich zu schaffen.

Die der Erfindung zugrunde liegende Aufgabenstellung wird durch die Merkmale des Patentanspruchs 1 gelöst. Vorteilhafte Weiterbildungen und Ausgestaltungen sind in den Unteransprüchen angegeben.

Ein erfindungsgemäßer Leitungstreiber zur Verstärkung eines Eingangsstroms in einen Ausgangsstrom weist einen Ansteuerverstärker, eine spannungsgesteuerte Ausgabestromquelle, einen Strom-Spannungs-Wandler und einen Spannungs-Strom-Wandler auf. Der Eingangsstrom wird in einen ersten Knoten eingekoppelt. Ein erster Verstärkereingang des Ansteuerverstärkers ist an den ersten Knoten gekoppelt und ein zweiter Verstärkereingang des Ansteuerverstärkers ist im Wesentlichen mit einer Referenzspannung beaufschlagt. Der Strom-Spannungs-Wandler ist zwischen den ersten und einen zweiten Knoten geschaltet. Die Funktion des Strom-Spannungs-Wandler ist es, einen ersten Strom, welcher dem Strom-Spannungs-Wandler von dem ersten Knoten zugeführt wird, in eine Spannung umzuwandeln, die an dem zweiten Knoten anliegt. Diese am zweiten Knoten anliegende Spannung wird von dem Spannungs-Strom-Wandler, welcher mit dem zweiten Knoten verbunden ist, in einen zweiten Strom umgewandelt und an einer Stromsenke abgeführt. Die spannungsgesteuerte Ausgabestromquelle wird von dem Ansteuerverstärker gesteuert. Eine stromführende Strecke der spannungsgesteuerten Ausgabestromquelle ist zwischen den zweiten Knoten und einen dritten Knoten geschaltet. Der Ausgangsstrom des erfindungsgemäßen Leitungstreibers wird aus dem dritten Knoten ausgekoppelt.

Beispielsweise kann der Strom-Spannungs-Wandler ein erster Widerstand sein und der Spannungs-Strom-Wandler kann ein zweiter Widerstand sein. Der zweite Widerstand ist über einen ersten Anschluss mit dem zweiten Knoten verbunden und an seinem zweiten Anschluss mit einem gemeinsamen festen Potential, welches insbesondere eine Masse sein kann, beaufschlagt.

In dieser Patentanmeldung ist unter einem Knoten nicht notwendigerweise ein Verzweigungspunkt von mehreren Leitungen zu verstehen. Vielmehr steht hier ein Knoten für einen Punkt auf einer Leitung, in dessen schaltungstechnischer Umgebung annähernd dasselbe Potential anliegt. Durch diese Definition lässt sich sogar eine ganze Verbindungsleitung als Knoten i-dealisieren.

Des Weiteren ist die Kopplung des ersten Verstärkereingangs an den ersten Knoten nicht notwendigerweise derart aufzufassen, dass der erste Verstärkereingang durch eine Verbindungsleitung mit dem ersten Knoten verbunden ist. Ebenso könnte zwischen den ersten Verstärkereingang und den ersten Knoten ein weiteres Bauelement geschaltet sein, über welches Signale zwischen dem Ansteuerverstärker und dem ersten Knoten ausgetauscht würden, sodass ebenfalls eine Kopplung zwischen dem ersten Verstärkereingang und dem ersten Knoten bestände.

Der schaltungstechnische Aufbau des erfindungsgemäßen Leitungstreibers entspricht dem Shunt-Series-Feedback-Prinzip, wobei eine grundlegend neue Struktur unter Verwendung einer reinen Current-Mode-Technik zum Einsatz kommt. Sowohl das Eingangs- als auch das Ausgangssignal sind folglich jeweils Ströme. Ein Teil des Ausgangsstroms wird durch die stromführende Strecke der spannungsgesteuerten Ausgabestromquelle, welche vorteilhafterweise durch einen MOS-Transistor realisiert sein kann, auf den ersten Knoten als Eingangsknoten rückgekoppelt. Die Verstärkung des Ausgangsstroms ist durch die Dimensionierung des ersten und des zweiten Widerstands einstellbar und somit variabel.

Aufgrund der Rückkopplung bei gleichzeitig hoher Schleifenverstärkung und der Verwendung von Widerständen weist der erfindungsgemäße Leitungstreiber eine hohe Linearität im Gleichspannungsbereich auf. Ebenso ergibt sich wegen einer sehr hohen Bandbreite des erfindungsgemäßen Leitungstreibers und wirksam reduzierten Parasiten im Signalpfad eine hohe Linearität im Hochfrequenzbereich. Die Verwendung der Current-mode-Technik ermöglicht ein gutes Signal-zu-Rausch-Verhältnis. Darüber hinaus ist die Schaltungstopologie des erfindungsgemäßen Leitungstreibers relativ einfach auf unterschiedliche Standards anpassbar. Dieses kann auch programmierbar ausgelegt werden. Bei einer Ansteuerung durch einen Digital-Analog-Konverter sind keine zusätzlichen Schaltungen zur Vorfilterung des Signals notwendig. Vielmehr kann die Vorfilterung durch eine geeignete Wahl des dominanten Pols in der Rückkopplung realisiert werden.

Vorteilhafterweise ist ein erster Kondensator zwischen den ersten Knoten und den zweiten Knoten geschaltet. Des Weiteren ist es von Vorteil, einen zweiten Kondensator zwischen den zweiten Knoten und das gemeinsame feste Potential zu schalten. Der erste und der zweite Kondensator dienen zur Hochfrequenzentkopplung.

Gemäß einer vorteilhaften Ausgestaltung der Erfindung ist der Ansteuerverstärker ein Transkonduktanzverstärker. Dabei sind insbesondere sein invertierender Eingang der erste Verstärkereingang und sein nicht-invertierender Eingang der zweite Verstärkereingang. Vorteilhafterweise ist der Ausgang des Ansteuerverstärkers mit dem Steueranschluss der spannungsgesteuerten Ausgabestromquelle verbunden.

Ein Transkonduktanzverstärker unterscheidet sich von einem konventionellen Operationsverstärker dadurch, dass er einen hochohmigen Ausgang besitzt. Daher eignen sich Transkonduktanzverstärker besonders zum Treiben von Leitungen. Dabei wird davon ausgegangen, dass der Ausgangswiderstand des Transkonduktanzverstärkers groß gegenüber dem Wellenwiderstand der Leitung ist.

Eine weitere vorteilhafte Ausgestaltung der Erfindung sieht vor, dass als Bauelemente für den ersten und/oder den zweiten Widerstand Transistoren anstelle von reinen Widerständen verwendet werden, wobei die Transistoren im Widerstandsbereich betrieben werden. Es ist auch denkbar, dass der erste und der zweite Widerstand durch eine Kombination aus einem Widerstand und Transistoren im Widerstandsbereich realisiert werden.

Vorteilhafterweise kann ferner der dritte Knoten mit einem Anschluss eines Terminierungswiderstands verbunden sein, wobei der zweite Anschluss des Terminierungswiderstands mit einem weiteren gemeinsamen festen Potential beaufschlagt ist. Das weitere gemeinsame feste Potential kann beispielsweise auch eine extern vorgegebene Versorgungsspannung sein.

Gemäß einer besonders bevorzugten Ausgestaltung der Erfindung weist ein pseudo-differentieller Leitungstreiber zur Verstärkung eines differentiellen Gesamteingangsstroms in einen differentiellen Gesamtausgangsstrom einen ersten und einen zweiten Leitungstreiber mit den vorstehend beschriebenen Merkmalen auf. Der differentielle Gesamteingangsstrom setzt sich aus einem ersten und aus einem zweiten Eingangsteilstrom zusammen. Ebenso weist der differentielle Gesamtausgangsstrom einen ersten und einen zweiten Ausgangsteilstrom auf. Der erste Eingangsteilstrom wird in den ersten Knoten des ersten Leitungstreibers eingekoppelt. Aus dem dritten Knoten des ersten Leitungstreibers wird der erste Ausgangsteilstrom ausgekoppelt. In analoger Weise wird mit dem zweiten Eingangsteilstrom und dem zweiten Ausgangsteilstrom mittels des zweiten Leitungstreibers verfahren. Darüber hinaus weisen die Referenzspannungen des ersten und des zweiten Leitungstreibers den gleichen Wert auf.

Der erfindungsgemäße pseudo-differentielle Leitungstreiber eignet sich besonders zur Signalübertragung von digitalen Signalen. Dabei weisen der erste Eingangsteilstrom und zweite Eingangsteilstrom jeweils symmetrische, komplementäre Signale auf. Diese Signale werden durch den erfindungsgemäßen pseudo-differentiellen Leitungstreiber in geeigneter Weise verstärkt und können beispielsweise eine Twisted-Pair-Leitung speisen. Bei dieser Betriebsart wird die übertragene Information durch die Polarität der Differenzsignale bestimmt.

Der erfindungsgemäße pseudo-differentielle Leitungstreiber zeichnet sich wie auch schon der vorstehend beschriebene Leitungstreiber durch eine hohe Linearität sowohl im Gleichspannungsbereich als auch im Hochfrequenzbereich aus. Des Weiteren ergibt sich aufgrund der Current-Mode-Technik ein gutes Signal-zu-Rausch-Verhältnis.

Gemäß einer weiteren besonders bevorzugten Ausgestaltung der Erfindung wird der erste Knoten des ersten Leitungstreibers zusätzlich von einer ersten steuerbaren Stromquelle gespeist. Ebenso wird der erste Knoten des zweiten Leitungstreibers von einer zweiten steuerbaren Stromquelle gespeist. Des Weiteren sind die zweiten Verstärkereingänge der Ansteuerverstärker des ersten und des zweiten Leitungstreibers vorteilhafterweise an einen vierten Knoten gekoppelt, welcher von einer dritten steuerbaren Stromquelle gespeist wird. Aus dem von der dritten steuerbaren Stromquelle bereitgestellten Strom lässt sich die Referenzspannung ableiten. Beispielsweise können die erste, die zweite und die dritte steuerbare Stromquelle von einer Einheit zur Arbeitspunkteinstellung oder Arbeitspunktregelung gesteuert werden.

Mit der vorstehend beschriebenen Maßnahme lässt sich der Arbeitspunkt des pseudo-differentiellen Leitungstreibers einstellen bzw. regeln, sodass optimale Betriebsbedingungen garantiert werden können und ohne dass zusätzliche parasitäre Komponenten im Signalpfad auftreten. Durch die Arbeitspunkteinstellung bzw. Arbeitspunktregelung kann die Ruhestromaufnahme des pseudo-differentiellen Leitungstreibers reduziert werden, ohne dadurch zusätzliche Verzerrungen oder Bandbreitenreduzierungen zu verursachen. Die erfindungsgemäße Schaltung des pseudo-differentiellen Leitungstreibers ist somit für hohe Frequenzen in Kombination mit niedrigen Versorgungsspannungen optimal ausgelegt.

In den Unteransprüchen 11 bis 36 sind verschiedene Ausgestaltungen und Weiterbildungen des pseudo-differentiellen Leitungstreibers nach Anspruch 10 angegeben. Dabei beziehen sich die Unteransprüche 11 bis 16 auf eine Ausgestaltung des pseudo-differentiellen Leitungstreibers, die in Fig. 2 und Fig. 3 dargestellt ist. Weitere Ausgestaltungen sind durch die Unteransprüche 11 bis 20 bzw. 21 bis 23 bzw. 24 bis 26 bzw. 27 bis 35 gegeben und in Fig. 7 bzw. Fig. 8 bzw. Fig. 9 bzw. Fig. 10 dargestellt.

Die Erfindung wird nachfolgend in beispielhafter Weise unter Bezugnahme auf die Zeichnungen näher erläutert.

Diese zeigen:

Fig. 1    ein schematisches Schaltbild eines pseudo-differentiellen Leitungstreibers gemäß dem Stand der Technik, welcher eine Twisted-Pair-Leitung speist;

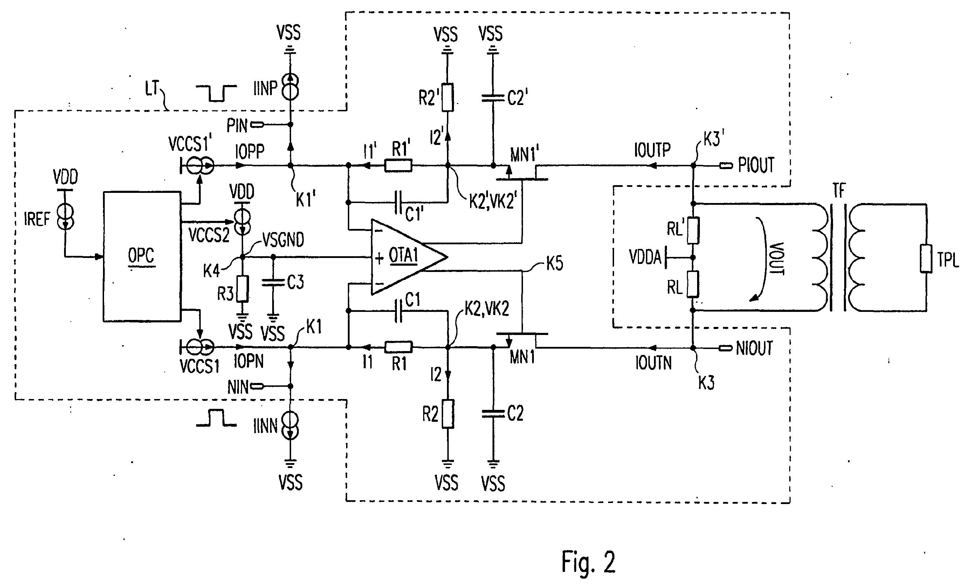

Fig. 2    ein Schaltbild eines ersten Ausführungsbeispiels des erfindungsgemäßen pseudo-differentiellen Leitungstreibers;

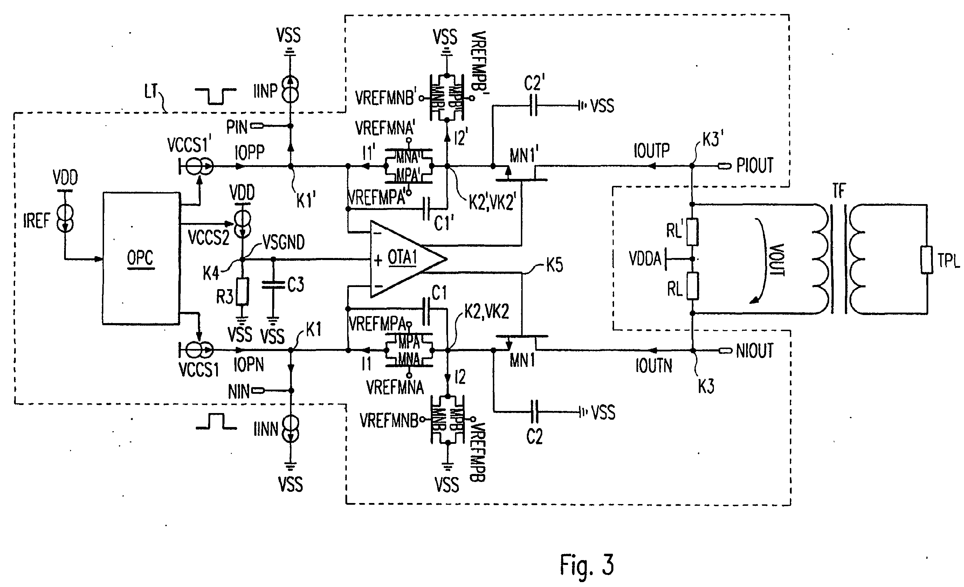

Fig. 3    ein Schaltbild einer Variation des ersten Ausführungsbeispiels des erfindungsgemäßen pseudo-differentiellen Leitungstreibers;

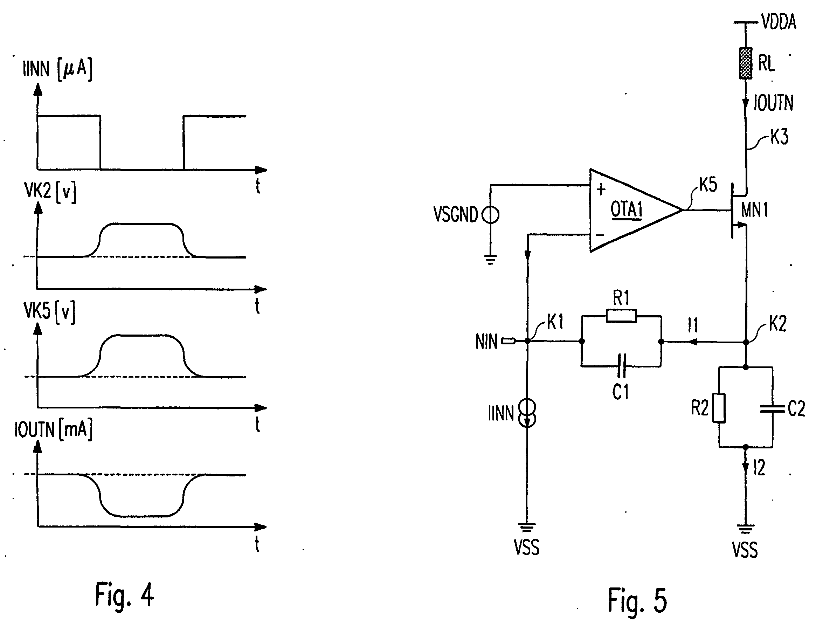

Fig. 4    Spannungs- und Stromverläufe zur Verdeutlichung der Funktionsweise des erfindungsgemäßen Leitungstreibers;

Fig. 5    ein Schaltbild eines Ausführungsbeispiel des erfindungsgemäßen Leitungstreibers zur Verdeutlichung seiner AC-Charakteristik;

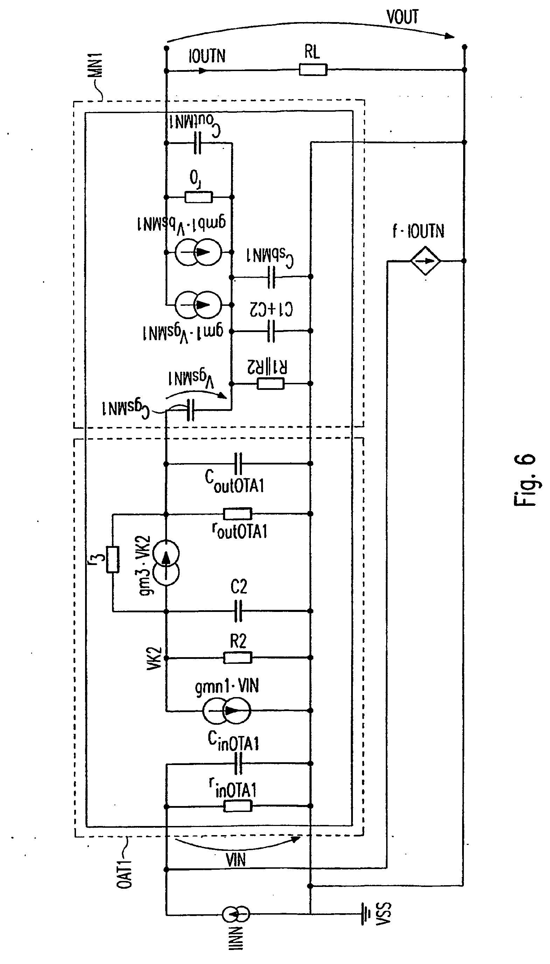

Fig. 6    ein Kleinsignal-Ersatzschaltbild des in Fig. 5 gezeigten Ausführungsbeispiels des erfindungsgemäßen Leitungstreibers;

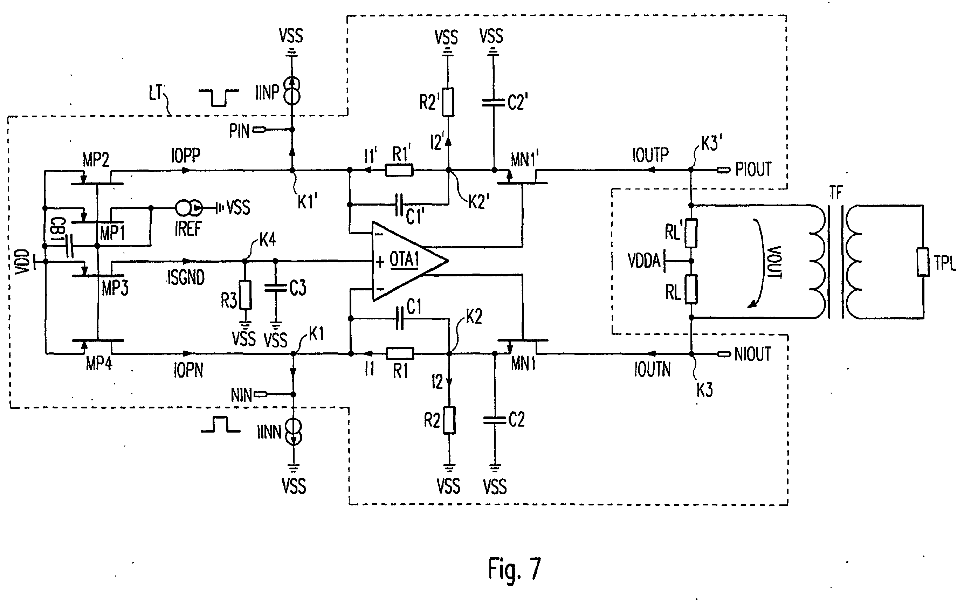

Fig. 7    ein Schaltbild eines zweiten Ausführungsbeispiels des erfindungsgemäßen pseudo-differentiellen Leitungstreibers;

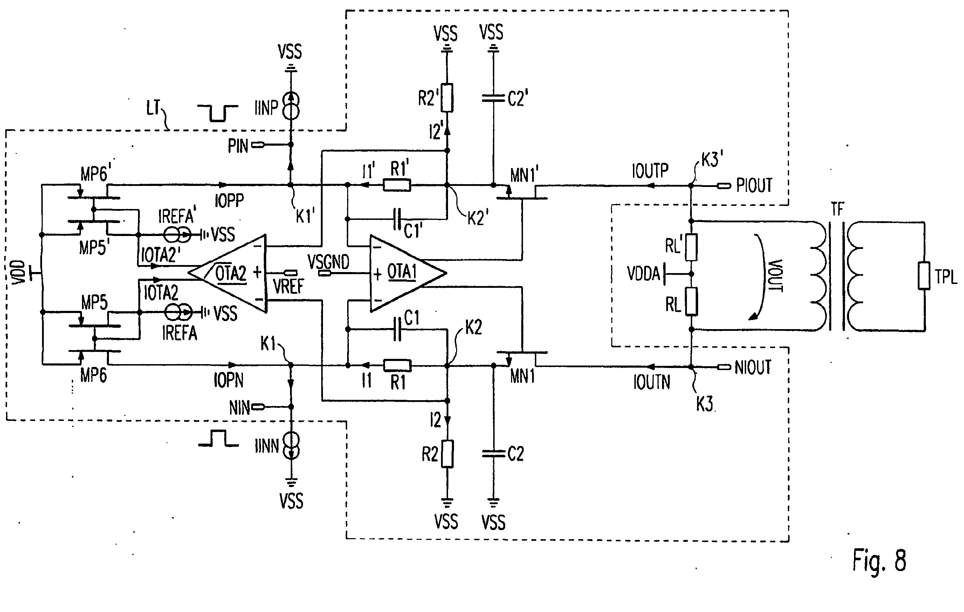

Fig. 8    ein Schaltbild eines dritten Ausführungsbeispiels des erfindungsgemäßen pseudo-differentiellen Leitungstreibers;

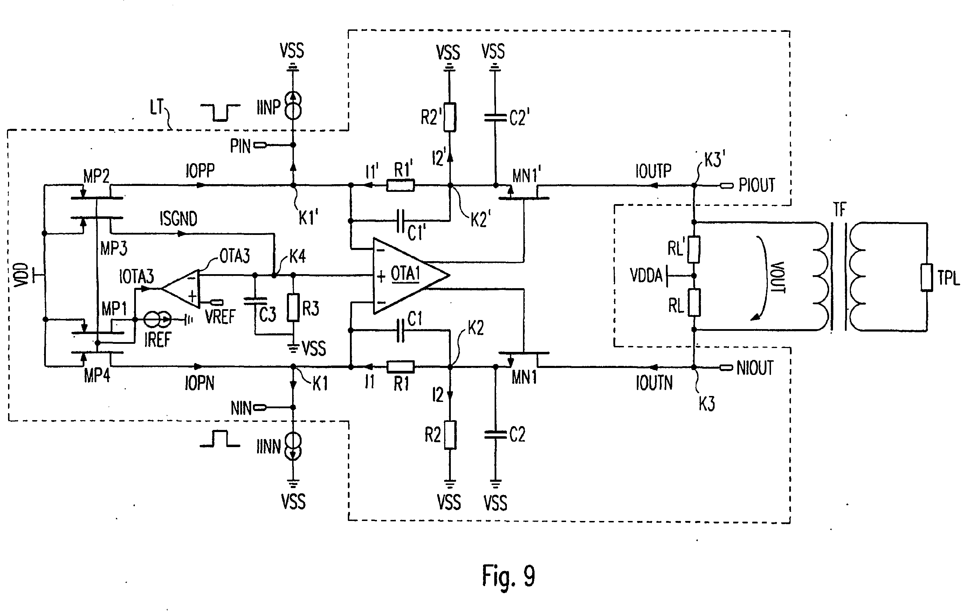

Fig. 9    ein Schaltbild eines vierten Ausführungsbeispiels des erfindungsgemäßen pseudo-differentiellen Leitungstreibers; und

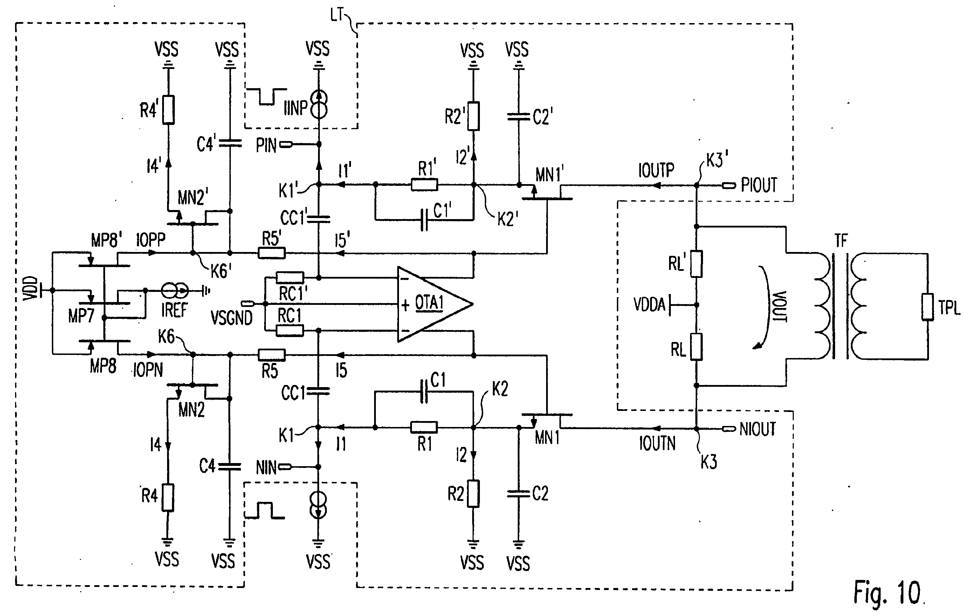

Fig. 10    ein Schaltbild eines fünften Ausführungsbeispiels des erfindungsgemäßen pseudo-differentiellen Leitungstreibers.

Fig. 2 zeigt ein Schaltbild eines ersten Ausführungsbeispiels eines erfindungsgemäßen pseudo-differentiellen Leitungstreibers LT, welcher in CMOS-Technologie realisiert ist. Das Schaltbild des pseudo-differentiellen Leitungstreibers LT ist symmetrisch um eine gedanklich horizontal durch die Mitte des Schaltbildes verlaufende Linie angeordnet. Aus Gründen der Vereinfachung und Klarheit wird bei der nachfolgenden Beschreibung des Schaltbildes teilweise lediglich auf die untere Hälfte des Schaltbildes eingegangen. Da die Symmetrie des Schaltbildes offensichtlich ist, ergibt sich die Beschaltung und Funktion der oberen Hälfte des Schaltbildes in analoger Weise. Des Weiteren steht im folgenden die Bezeichnung MNx bzw. MPx (mit x = 1, 2, 3,...) für n-Kanal-MOSFETs bzw. p-Kanal-MOSFETs.

Der pseudo-differentielle Leitungstreiber LT ist als steuerbare Stromquelle ausgelegt. Komplementäre Eingangsströme IINN und IINP, die den pseudo-differentiellen Leitungstreiber LT an Eingängen NIN und PIN speisen, werden verstärkt als Ausgangsströme IOUTN und IOUTP an Ausgängen NIOUT und PIOUT ausgegeben.

Der Ausgangsstrom IOUTN bzw. IOUTP wird von einem Transistor MN1 bzw. MN1' erzeugt und an dessen Drain-Anschluss ausgegeben. Der Transistor MN1 bzw. MN1' wird zu diesem Zweck von einem Transkonduktanzverstärker OTA1 angesteuert. Dazu sind der Ausgang des Transkonduktanzverstärkers OTA1 und der Gate-Anschluss des Transistors MN1 bzw. MN1' miteinander verbunden. Ein Teil des Ausgangsstroms IOUTN bzw. IOUTP wird durch die Drain-Source-Strecke des Transistors MN1 bzw. MN1' auf einen invertierenden Eingang des Transkonduktanzverstärkers OTA1 zurückgekoppelt. Dazu speist der Transistor MN1 bzw. MN1' mit seinem Source-Anschluss einen Knoten K2 bzw. K2', welcher wiederum über einen Widerstand R1 bzw. R1' mit einem Knoten K1 bzw. K1' verbunden ist. Hier sei darauf hingewiesen, dass ein wesentlicher Vorteil dieser Anordnung die niedrige Knotenimpedanz am Knoten K2 bzw. K2' ist. Der Knoten K1 bzw. K1' ist sowohl mit dem invertierenden Eingang des Transkonduktanzverstärkers OTA1 als auch mit dem Eingang NIN bzw. PIN des pseudo-differentiellen Leitungstreibers LT verbunden. An dem Knoten K2 bzw. K2' liegt des Weiteren ein Widerstand R2 bzw. R2' an, welcher gegen ein gemeinsames festes Potential, welches insbesondere eine Masse VSS sein kann, geschaltet ist.

Der nicht-invertierende Eingang des Transkonduktanzverstärkers OTA1 steht mit einem Knoten K4 in Verbindung. An dem Knoten K4 wird ein Spannung VSGND erzeugt, welche als Signalmasse dient. Diese Erzeugung der Spannung VSGND erfolgt durch eine spannungsgesteuerte Stromquelle VCCS2, welche den Knoten K4 speist. Der von der spannungsgesteuerten Stromquelle VCCS2 erzeugte Strom fließt über einen an den Knoten K4 gekoppelten Widerstand R3 gegen die Masse VSS ab.

Zwischen die Knoten K1 und K2 bzw. K1' und K2' ist ein Kondensator C1 bzw. C1' geschaltet. An den Knoten K2 bzw. K2' ist ein Kondensator C2 bzw. C2' gegen die Masse VSS geschaltet. Analoges gilt für den Knoten K4 und einen Kondensator C3. Die Kondensatoren C1, C1', C2, C2' und C3 dienen zur Hochfrequenzentkopplung.

Die Aufgabe des Transkonduktanzverstärkers OTA1 ist es, die an dem Knoten K1 bzw. K1' anliegende Spannung auf die an dem Knoten K4 anliegende Spannung VSGND zu regeln. Dazu wird das Gate-Potential des Transistors MN1 bzw. MN1' entsprechend variiert. Über die das Rückkoppelnetzwerk bildenden Widerstände R1 und R2 bzw. R1' und R2' lässt sich die Verstärkung des pseudo-differentiellen Leitungstreibers LT einstellen.

In Fig. 2 ist der pseudo-differentielle Leitungstreiber LT ausgangsseitig mit einem Transformator TF beschaltet, wobei an dem Transformator TF primärseitig eine von den Ausgangsströmen IOUTN und IOUTP erzeugte Ausgangsspannung VOUT anliegt. Der Transformator TF speist beispielsweise eine Twisted-Pair-Leitung TPL. Die Ausgangsströme IOUTN und IOUTP werden über Terminierungswiderstände RL und RL', die zwischen die Knoten K3 und K3' geschaltet sind, gegen eine externe Versorgungsspannung VDDA abgeführt. Über die beiden in Serie geschalteten Terminierungswiderstände RL und RL' fällt die Ausgangsspannung VOUT ab. Der Ausgangswiderstand des pseudo-differentiellen Leitungstreibers LT ist dabei wesentlich größer als die aus den Terminierungswiderständen RL und RL' bestehende externe Last.

Zur Einstellung und gegebenenfalls Regelung des DC-Arbeitspunktes werden neben der spannungsgesteuerten Stromquelle VCCS2 weitere spannungsgesteuerte Stromquellen VCCS1 und VCCS1' eingesetzt. Die spannungsgesteuerte Stromquelle VCCS1 bzw. VCCS1' speist den Knoten K1 bzw. K1' mit einem Strom IOPN bzw. IOPP. Die spannungsgesteuerten Stromquellen VCCS1, VCCS1' und VCCS2 werden von einer Einheit OPC zur DC-Arbeitspunkteinstellung bzw. DC-Arbeitspunktregelung gesteuert. Die Einheit OPC wiederum wird von einem von einer Konstantstromquelle IREF bereitgestellten Strom gespeist. Der Strom der Konstantstromquelle IREF wird zur DC-Arbeitspunkteinstellung des pseudo-differentiellen Leitungstreibers LT verwendet und dient gleichzeitig auch als Referenzstrom für die Signalerzeugung. Dadurch wird ein Gleichlauf zwischen den Stromsignalen und den Arbeitspunkten der Schaltung gewährleistet und Übersteuerungseffekte werden vermieden. Ferner dient eine gewichtete Replika des von der Konstantstromquelle IREF bereitgestellten Stroms zur DC-Stromeinstellung des Transistors MN1 bzw. MN1' und somit auch zur Ruhestrom-Einstellung durch die externe Last.

Des Weiteren ermöglicht es die vorliegende Schaltung, eine Querstrom- bzw. Ruhestromkompensation durchzuführen. Dieses beinhaltet es, die Vorsättigung des dem pseudo-differentiellen Leitungstreiber LT nachgeschalteten Transformators TF, die Leistungsaufnahme der Schaltung im Ruhefall sowie eventuelle Unsymmetrien der Schaltung regeln zu können.

In Fig. 3 ist ein Schaltbild einer Variation des in Fig. 2 gezeigten ersten Ausführungsbeispiels dargestellt. Bei diesem Leitungstreiber LT sind die Widerstände R1 bzw. R1' sowie R2 bzw. R2' durch Transistoren MNA und MPA bzw. MNA' und MPA' sowie MNB und MPB bzw. MNB' und MPB' ersetzt worden. Dabei sind die Transistoren MNA, MNA', MNB und MNB' n-Kanal-MOSFETs, während die Transistoren MPA, MPA', MPB und MPB' p-Kanal-MOSFETs sind.

Der Transistor MNA ist mit seiner Drain-Source-Strecke zwischen die Knoten K1 und K2 geschaltet. Parallel zu dem Transistor MNA ist der Transistor MPA geschaltet. Der Transistor MNB ist mit seiner Drain-Source-Strecke zwischen den Knoten K2 und die Masse VSS geschaltet. Parallel zu dem Transistor MNB ist der Transistor MPB geschaltet. Entsprechendes gilt für die Transistoren MNA' und MPA' sowie MNB' und MPB'.

Die Gate-Potentiale der Transistoren MNA, MPA, MNB etc. werden durch Referenzspannungen VREFx (mit x = MNA, MPA, MNB etc.) angesteuert. Sofern die Transistoren MNA, MPA, MNB, MPB, MNA', MPA', MNB' und MPB' im Widerstandsbereich betrieben werden, lässt sich bei der vorliegenden Schaltungsanordnung durch diese Transistoren der Verstärkungsfaktor des pseudo-differentiellen Leitungstreibers LT einstellen. Es kann auch vorgesehen sein, dass die Transistoren MNA, MPA, MNB, MPB, MNA', MPA', MNB' und MPB' alle mit der gleichen Gate-Spannung beaufschlagt sind. Dazu könnten die Gate-Anschlüsse dieser Transistoren schaltungstechnisch miteinander verbunden sein und von einer gemeinsamen Referenzspannungsquelle versorgt werden.

Im Folgenden wird das Gleichstromverhalten des in Fig. 2 dargestellten pseudo-differentiellen Leitungstreibers LT beschrieben.

Im Ruhezustand, d.h. ohne einen den Eingang NIN speisenden Eingangsstrom IINN, stellt sich ein durch den Widerstand R2 fließender Strom I2 in Abhängigkeit von der am Knoten K2 anliegenden Spannung ein. Die am Knoten K2 anliegende Spannung wird bestimmt durch die am Knoten K4 anliegende Spannung VSGND und den Spannungsabfall über den Widerstand R1, welcher durch den Strom IOPN verursacht wird. Durch das Regelverhalten der Schaltung stellt sich am Knoten K1 die Spannung VSGND ein, sofern sowohl der Strom IOPN als auch der durch den Widerstand R1 fließende Strom I1 gleich Null sind. Im Ruhezustand gilt somit für den Ausgangsstrom IOUTN durch die Drain-Source-Strecke des Transistors MN1 und durch den Terminierungswiderstand RL:

$$IOUTN = VSGND / R2 \qquad\qquad (1)$$

Aus Gleichung (1) lässt sich die zwischen den Knoten K3 und K3' abfallende Ausgangsspannung VOUT berechnen:

$$VOUT = VDDA - IOUTN \cdot RL \qquad\qquad (2)$$

Aus Gleichung (1) lässt sich ablesen, dass sich ohne den von der spannungsgesteuerten Stromquelle VCCS1 bereitgestellten Strom IOPN der Ausgangsstrom IOUTN im Ruhezustand durch die Last aus dem Quotienten aus der Spannung VSGND, welches die Signalmasse ist, und dem Widerstand R2 ergeben würde. Ohne eine DC-Arbeitspunktregelung wäre folglich der Ausgangsstrom IOUTN im Ruhezustand direkt proportional zu der Signalmasse. Für die Ansteuerung des pseudo-differentiellen Leitungstreibers LT ist es jedoch vorteilhaft, die Signalmasse konstant zu belassen. Durch das Hinzufügen einer Ruhestromregelung zu der Schaltung kann der Ausgangsstrom IOUTN im Ruhezustand geregelt werden, ohne dabei die Signalmasse verändern zu müssen. Ein weiterer Vorteil einer Ruhestromregelung ist es, dass dadurch die Spannung VSGND größer als die am Knoten K2 anliegende Spannung sein kann. Dieses vergrößert den effektiv nutzbaren Spannungsaussteuerbereich über der Last. Allerdings muss ein Mindestspannungsabfall über der Last im Ruhezustand garantiert sein, damit bei einer wie in Fig. 2 dargestellten Realisierung des pseudo-differentiellen Leitungstreibers LT mit Transistoren der eingestellte Arbeitspunkt und somit die Funktion des pseudo-differentiellen Leistungstreibers LT als Stromquelle gewährleistet sind.

Bei einer Berücksichtigung des Stroms IOPN ergibt sich aus der Schaltungsanordnung, dass der Strom I1 durch den Widerstand R1 zum Knoten K2 hin in eine Spannung VK2 umgewandelt wird. Diese Spannung VK2 am Knoten K2 wird durch den Widerstand R2 wieder in einen Strom I2 umgewandelt. Insgesamt folgt daraus für den Ausgangsstrom IOUTN folgende Gleichung:

$$IOUTN = \frac{VSGND \pm IOPN \cdot R1}{R2} \qquad\qquad (3)$$

Für die Ausgangsspannung VOUT ergibt sich demnach:

$$VOUT = VDDA - \frac{VSGND \pm IOPN \cdot R1}{R2} \cdot RL \qquad\qquad (4)$$

Bei der Verwendung einer CMOS-Differenzeingangsstufe anstelle eines herkömmlichen Stromoperationsverstärkers, ist der Eingangswiderstand sehr hoch, welches wiederum einen geringen Fehlerstrom nach sich zieht. Daraus ergibt sich ein wesentlicher Beitrag zu der hohen Linearität des erfindungsgemäßen pseudo-differentiellen Leitungstreibers LT im Zusammenhang mit der Varianz des Eingangswiderstands über Aussteuerung und Frequenz.

Die Gleichstromverstärkung $A_{idc}$ der in Fig. 2 dargestellten , Schaltung ergibt sich aus folgender Gleichung:

$$A_{idc} = \frac{IOUTN}{IINN} = \left( \frac{R1 + R2}{R2} \right) \qquad\qquad (5)$$

Für den Ausgangswiderstand $r_{outMN1}$ der in Fig. 2 dargestellten Schaltung gilt:

$$r_{outMN1} \cong \frac{1}{gds_{MN1}} \cdot [1 + gm_{totMN1} \cdot (R1\|R2)] + (R1\|R2), \quad (6)$$

wobei $gds_{MN1}$ die Drain-Source-Steilheit des Transistors MN1 und $gm_{totMN1}$ den Übertragungsleitwert des Transistors MN1 unter Berücksichtigung des Gegensteuereffekts angeben. Für $gds_{MN1}$ und $gm_{totMN1}$ gelten folgende Gleichungen:

$$gds_{MN1} \cong \frac{\lambda}{1 + \lambda \cdot V_{dsMN1}} \quad (7)$$

$$gm_{totMN1} \cong \sqrt{\frac{\mu_n \cdot C_{ox} \cdot W_{MN1}}{L_{MN1}} \cdot I_{dsMN1}} \cdot \left(1 - \frac{\gamma / 2}{\sqrt{2 \cdot \phi_P + V_{sbMN1}}}\right) \quad (8)$$

Bei den vorstehenden Gleichungen stehen $\lambda$ für eine Prozesskonstante, $V_{dsMN1}$ für die Drain-Source-Spannung des Transistors MN1, $\mu_n$ für die Mobilität der Ladungsträger, $C_{ox}$ für die Kapazität des Gateoxids, $W_{MN1}$ bzw. $L_{MN1}$ für die Breite bzw. die Länge der Gate-Elektrode des Transistors MN1, $I_{dsMN1}$ für den durch die Drain-Source-Strecke des Transistors MN1 fließenden Strom, $\gamma$ für eine Konstante, $\Phi_P$ für ein Potential und $V_{sbMN1}$ für die Source-Bulk-Spannung des Transistors MN1.

Aus den Gleichungen (3), (6), (7) und (8) kann die Abhängigkeit des Ausgangswiderstands $r_{outMN1}$ vom Strom IOPN und der am Knoten K4 anliegenden Spannung VSGND abgeleitet werden.

Zum besseren Verständnis der Funktion des erfindungsgemäßen pseudo-differentiellen Leitungstreibers LT dienen die in Fig. 4 dargestellten Signalverläufe des Eingangsstroms IINN, der am Knoten K2 anliegenden Spannung VK2, der an einem Knoten K5 anliegenden Spannung VK5, wobei der Knoten K5 auf der Verbindungsleitung zwischen dem Ausgang des Transkonduktanzverstärkers OTA1 und dem Gate-Anschluss des Transistors MN1 liegt, und des Ausgangsstroms IOUTN. Die in Fig. 4 gezeigten Signale sind gegen die Zeit t aufgetragen.

Im Folgenden soll das Wechselstromverhalten des in Fig. 2 dargestellten pseudo-differentiellen Leitungstreibers LT betrachtet werden.

Dazu dient es der verbesserten Veranschaulichung, aus der in Fig. 2 dargestellten Schaltung den Teil der Schaltung zu extrahieren, der zu der Verstärkung einer der beiden komplementären Eingangsströme IINN bzw. IINP benötigt wird. In Fig. 5 ist der Teil der Schaltung des pseudo-differentiellen Leitungstreibers LT dargestellt, der zur Verstärkung des Eingangsstroms IINN dient. Das Kleinsignal-Ersatzschaltbild der in Fig. 5 dargestellten Schaltung ist in Fig. 6 gezeigt. Bei dem Kleinsignal-Ersatzschaltbild wird davon ausgegangen, dass der Transkonduktanzverstärker OTA1 in einer sogenannten Folded-Cascode-Konfiguration vorliegt.

In Fig. 6 sind die Bereiche der Schaltung, die das Kleinsignal-Ersatzschaltbild des Transkonduktanzverstärkers OTA1 bzw. des Transistors MN1 wiedergeben, durch gestrichelte Linien markiert. VIN bezeichnet die Eingangsspannung des Leitungstreibers und f den Rückkopplungsfaktor der Rückkoppelschlei- , fe. Bei dem Transkonduktanzverstärker OTA1 stehen $r_{inOTA1}$, $C_{inO-TA1}$, $r_{outOTA1}$ und $C_{outOTA1}$ für seinen Eingangswiderstand, seine Eingangskapazität, seinen Ausgangswiderstand und seine Ausgangskapazität. Bei dem Transistor MN1 stehen $C_{gsMN1}$ für seine Gate-Source-Kapazität, $V_{gsMN1}$ für seine Gate-Source-Spannung, $C_{sbMN1}$ für seine Source-Bulk-Kapazität, $V_{bsMN1}$ für seine Bulk-Source-Spannung und $C_{outMN1}$ für seine Ausgangskapazität. Die Größen gmnl, gm3., gm1 und gmbl bezeichnen Übertragungsleitwerte, und $r_3$ sowie $r_0$ stehen für Widerstände.

Aus dem Kleinsignal-Ersatzschaltbild lassen sich die mathematischen Zusammenhänge für den Eingangswiderstand $Z_{in}(s)$, den Ausgangswiderstand $Z_{out}(s)$ und die Übertragungsfunktion $A_i(s)$ des dort dargestellten Leitungstreibers im Frequenzbereich ableiten.

Der Eingangswiderstand $Z_{in}(s)$ des Leitungstreibers ergibt sich aus folgenden Gleichungen:

$$Z_{in}(s) \approx \left(\frac{Z_{inOTA1}(s)\|(R1 + R2)}{1 + T_{loop}(s)}\right) \quad (9)$$

$$a(s) = A_{OTA1}(s) \cdot A_{MN1}(s) \qquad (10)$$

$$f(s) = \left(\frac{R2}{R1 + R2}\right) \cdot \frac{1 + s \cdot R1 \cdot C1}{1 + s \cdot \dfrac{R1 \cdot R2}{R1 + R2} \cdot C1} \qquad (11)$$

$$T_{loop}(s) = a(s) \cdot f(s) \qquad (12)$$

Bei den Gleichungen (9) bis (12) stehen $Z_{inOTA1}(s)$ für den Eingangswiderstand des Transkonduktanzverstärkers OTA1, $T_{loop}(s)$ für die Schleifenverstärkung, $a(s)$ für den Leerlaufverstärkungsfaktor der Verstärkeranordnung, $A_{OTA1}(s)$ für den Leerlaufverstärkungsfaktor des Transkonduktanzverstärkers OTA1, $A_{MN1}(s)$ für den Leerlaufverstärkungsfaktor des Transistors MN1 und $f(s)$ für den Rückkopplungsfaktor.

Unter der Annahme, dass der Transkonduktanzverstärker OTA1 ein einstufiger Verstärker ist, kann der Leerlaufverstärkungsfaktor $A_{OTA1}(s)$ des Transkonduktanzverstärkers OTA1 vereinfacht als Funktion mit einer Nullstelle $\omega_{z1}$ und Polstellen $\omega_{p1}$ und $\omega_{p2}$ angegeben werden:

$$A_{OTA1}(s) = \frac{A_{V0dc} \cdot (1 - s / \omega_{z1})}{(1 - s / \omega_{p1}) \cdot (1 - s / \omega_{p2})}, \qquad (13)$$

wobei $A_{V0dc}$ für den Leerlaufverstärkungsfaktor des Transkonduktanzverstärkers OTA1 im Gleichstromfall steht.

Aus den vorstehenden Gleichungen ergibt sich als Übertragungsfunktion $A_i(s)$ des Leitungstreibers:

$$A_i(s) = \frac{R1 \cdot R2}{R2} \cdot \frac{1}{1 + 1 / T_{loop}(s)} \qquad (14)$$

Unter Berücksichtigung von Gleichung (6) ergibt sich der Ausgangswiderstand $Z_{out}(s)$ wie folgt:

$$z_0(s) = r_{outMN1}(s) \cdot (1 + T_{loop}(s)) \qquad (15)$$

$$Z_{out}(s) = \frac{RL \| z_0(s)}{1 + s / ((RL \| z_0(s)) \cdot C_{dsMN1})}, \qquad (16)$$

wobei $C_{dsMN1}$ für die Drain-Source-Kapazität des Transistors MN1 steht.

Da der Eingangswiderstand der Operationsverstärkerstufe in CMOS-Technologie im Bereich oberhalb von 100 kΩ liegt, hat die Verstärkerschaltung nur einen geringen Einfluss auf den Eingangswiderstand $Z_{in}(s)$ des Leitungstreibers. Somit ist eine zusätzliche Belastung der steuerbaren Stromquelle nicht gegeben. Unerwünschte Verzerrungen durch einen erhöhten Fehlerstrom im Frequenzbereich, eventuell verursacht durch Umladeeffekte und einen niedrigen Eingangswiderstand bei Stromverstärkerkonfigurationen, werden dadurch minimiert. Dieses ist ein wesentlicher Vorteil der vorliegenden Schaltung. Daher lässt sich der Eingangswiderstand $Z_{in}(s)$ des Leitungstreibers unter Berücksichtigung von Gleichung (2) folgendermaßen darstellen:

$$Z_{in}(s) \cong \frac{R1 + R2}{1 + T_{loop}(s)} \qquad (17)$$

Unter der Annahme, dass die Einheit OPC einen Rückkopplungsregelkreis des Arbeitspunktes darstellt und folglich den Ruhestrom durch den Transistor MN1 regelt, ist die Übertragungsfunktion $A_i(s)$ nach Gleichung (14) der in Fig. 2 gezeigten Schaltungsanordnung entsprechend anzupassen. Zur Vereinfachung kann die Rückkopplungsschleife als System mit einem dominanten Pol $\omega_{fb}$ aufgefasst werden, und es gilt folgende Gleichung für die Übertragungsfunktion $H_{fb}(s)$ in der Laplaceebene, wobei $A_{0fb}$ für die DC-Verstärkung steht:

$$H_{fb}(s) = \frac{A_{0fb}}{1 - s / \omega_{fb}} \qquad (18)$$

Somit ergibt sich unter der Annahme eines Rückkopplungsregelkreis des Arbeitspunktes für die Übertragungsfunktion $A_{ifb}(s)$ folgende Funktion:

$$A_{ifb}(s) = \frac{A_i(s)}{1 + A_i(s) \cdot H_{fb}(s)} = \frac{\dfrac{R1 \cdot R2}{R2} \cdot \dfrac{1}{1 + 1 / T_{loop}(s)}}{1 + \dfrac{R1 \cdot R2}{R2} \cdot \dfrac{A_{0fb}}{(1 + 1 / T_{loop}(s)) \cdot (1 - s / \omega_{fb})}} \qquad (19)$$

Die Polstelle $\omega_{fb}$ der Rückkopplungsschleife wirkt in der Übertragungsfunktion $A_{ifb}(s)$ als zusätzliche Nullstelle. Die Polstelle $\omega_{fb}$ ist so zu wählen, dass die niedrigsten spektralen Frequenzanteile des zu verstärkenden Stromsignals ohne zusätzliche Verzerrungen übertragen werden und die Stabilität des Leitungstreibers nicht beeinträchtigt wird.

Bei einer Realisierung des Leitungstreibers mit einer AC-Kopplung, wie sie nachfolgend in Fig. 10 vorgestellt wird, ist in Gleichung (9) eine zusätzliche Nullstelle vorzusehen. Eine Kleinsignalanalyse ergibt dann die folgende Übertragungsfunktion $A_{iac}(s)$ im Frequenzbereich:

$$A_{iac}(s) = \frac{R1 + R2}{R2} \cdot \sqrt{\left( \frac{1}{1 + \dfrac{1}{T_{loop}(s)}} \right) \cdot \left( 1 - \frac{1}{1 - s \cdot CC1 \cdot RC1} \right)} \qquad (20)$$

Nachfolgend werden einige grundlegende Betrachtungen zur Stabilität des in Fig. 2 dargestellten pseudo-differentiellen Leitungstreibers LT angestellt. Als Kriterium für die Stabilität der Schaltung lässt sich die Schleifenverstärkung $T_{loop}(s)$ heranziehen:

$$T_{loop}(s) = \frac{A_{V0dc} \cdot A_{V0MN1}}{A_{idc}} \cdot \frac{(1 - s / \omega_{z1}) \cdot (1 - s / \omega_{z2})}{(1 - s / \omega_{p1}) \cdot (1 - s / \omega_{p2}) \cdot (1 - s / \omega_{p3}) \cdot (1 - s / \omega_{p4}}$$

$$(21)$$

Hierbei stehen $\omega_{z2}$ für eine Nullstelle und $\omega_{p3}$ für eine Polstelle des Rückkopplungsnetzwerkes, $A_{V0MN1}$ für den Leerlaufverstärkungsfaktor des Transistors MN1, $\omega_{p4}$ für eine Nullstelle des Transistors MN1 und $A_{idc}$ für eine Gleichstromverstärkung. Für die Gleichstromverstärkung $A_{idc}$ und den Leerlaufverstärkungsfaktor $A_{V0MN1}$ des Transistors MN1 gelten die Gleichungen (22) und (23):

$$A_{idc} = \frac{R1 + R2}{R2} \qquad\qquad (22)$$

$$A_{V0MN1} \cong \frac{gm_{MN1}}{gm_{MN1} + 1} \qquad\qquad (23)$$

In Gleichung (23) steht $gm_{MN1}$ für den Übertragungsleitwert des Transistors MN1.
Die Nullstellen $\omega_{z1}$ und $\omega_{z2}$ sowie die Polstellen $\omega_{p1}$, $\omega_{p2}$, $\omega_{p3}$ und $\omega_{p4}$ ergeben sich näherungsweise aus den Gleichungen (24) bis (29) :

$$\omega_{z1} \cong \frac{gm_{OTA1}}{C_{outOTA1}} \qquad\qquad (24)$$

$$\omega_{z2} \cong \frac{1}{R1 \cdot C1} \qquad\qquad (25)$$

$$\omega_{p1} \cong \frac{1}{r_{outOTA1} \cdot C_{outOTA1}} \qquad\qquad (26)$$

$$\omega_{p2} \cong \frac{1}{r_3 \cdot C2} \qquad\qquad (27)$$

$$\omega_{p3} \cong \frac{R1 + R2}{R2} \cdot \frac{1}{R1 \cdot C1} \qquad\qquad (28)$$

$$\omega_{p4} \cong \frac{1}{r_{outMN1} \cdot \left(1 + \frac{A_{V0dc} \cdot A_{V0MN1}}{A_{idc}}\right) \cdot C_{outMN1}} \qquad\qquad (29)$$

In Gleichung (24) bezeichnet $gm_{OTA1}$ den Übertragungsleitwert des Transkonduktanzverstärkers OTA1.

11

Aus den vorstehenden Gleichungen ergibt sich als Phasenreserve PM:

$$
PM = \pi / 2 - \arctan\left(\frac{GBW}{2\pi \cdot \omega_{p1}}\right) - \arctan\left(\frac{GBW}{2\pi \cdot \omega_{p2}}\right) - \arctan\left(\frac{GBW}{2\pi \cdot \omega_{p3}}\right)
$$

$$
- \arctan\left(\frac{GBW}{2\pi \cdot \omega_{p4}}\right) + \arctan\left(\frac{GBW}{2\pi \cdot \omega_{z1}}\right) + \arctan\left(\frac{GBW}{2\pi \cdot \omega_{z2}}\right) \tag{30}
$$

Hierbei kann das Verstärkungsbandbreitenprodukt GBW des pseudo-differentiellen Leitungstreibers LT nach folgender Gleichung berechnet werden:

$$
GBW \cong \frac{A_{VOdc} \cdot A_{VOMN1}}{A_{idc}} \cdot \frac{1}{2\pi \cdot R1 \cdot C1} \tag{31}
$$

Der dominante Pol $\omega_d$ der Schaltungsanordnung wird durch den Rückkopplungszweig bestimmt:

$$
\omega_d = \frac{1}{R1 \cdot C1} \tag{32}
$$

Falls der Pol $\omega_{p2}$ des Transkonduktanzverstärkers OTA1 und der parasitäre Pol $\omega_{p4}$ am Ausgang des Transistors MN1 größer sind als der dominante Pol $\omega_d$, wird die Stabilität des pseudo-differentiellen Leitungstreibers LT durch den Pol $\omega_d$ im Rückkopplungszweig bestimmt. Daher kann auf eine zusätzliche Stabilisierung des Transkonduktanzverstärkers OTA1 verzichtet werden. Zusätzlich kann der dominante Pol $\omega_d$ so ausgelegt werden, dass der pseudo-differentielle Leitungstreiber LT au-βerdem als Formfilter dient.

Sollte aufgrund der Leistungsaufnahme der Pol $\omega_{p2}$ zu nahe am dominanten Pol $\omega_d$ liegen, so kann durch eine AC-Feedforward-Schaltung vom Eingang des Transkonduktanzverstärkers OTA1 zur Kaskode eine zusätzliche Nullstelle erzeugt werden. Die Polstelle $\omega_{p2}$ wird durch diese Polstellenkompensation zu höheren Frequenzen verschoben.

Für die Realisierung der nachfolgend beschriebenen und in den Fig. 8 und 10 gezeigten Schaltungen muss bei der Stabilitätsbetrachtung die zusätzliche Nullstelle durch den Rückkopplungszweig bzw. durch die AC-Kopplung berücksichtigt werden. Als Anhaltspunkt kann davon ausgegangen werden, dass die Grenzfrequenzen der Nullstellen weit unterhalb des dominanten Pols $\omega_d$ liegen sollten.

Bei den meisten Anwendungen des pseudo-differentiellen Leitungstreibers LT, wie z.B. beim Ethernet 10/100/1000 Base T, muss der Ausgangspuls eine Pulsmaske einhalten. Unter der Annahme, dass die dominante Polstelle $\omega_d$ kleiner als die Polstellen $\omega_{p1}$ bis $\omega_{p4}$ ist, kann das Verhalten des pseudo-differentiellen Leitungstreibers LT im Zeitbereich vereinfacht wie folgt angegeben werden:

$$
VOUT(t) = RL \cdot IINN \cdot (1 - \exp(-t / \omega_d)) \tag{33}
$$

Für die Pulsmaske des Standards 1000 Base T ist beispielsweise für einen Puls von 1 V innerhalb einer Anstiegszeit von 4 ns ein Anstieg zwischen 10 % und 90 % der Pulshöhe gefordert. Aus derartigen Forderungen des jeweils zugrunde liegenden Standards und den vorstehend angegebenen Gleichungen kann der pseudo-differentielle Leitungstreiber LT entsprechend dimensioniert werden.

Nachfolgend werden weitere Ausführungsbeispiele des erfindungsgemäßen pseudo-differentiellen Leitungstreibers LT vorgestellt. Insbesondere sollen dabei Realisierungsmöglichkeiten für die in Fig. 2 gezeigte Einheit OPC zur DC-Arbeitspunkteinstellung bzw. DC-Arbeitspunktregelung und die spannungsgesteuerten Stromquellen VCCS1, VCCS1' sowie VCCS2 aufgezeigt werden.

In Fig. 7 ist ein Schaltbild eines zweiten Ausführungsbeispiel des erfindungsgemäßen pseudo-differentiellen Leitungstreibers LT dargestellt. Die Einheit OPC und die spannungsgesteuerten Stromquellen VCCS1 und VCCS1' werden in dem vorliegenden Ausführungsbeispiel durch Transistoren MP1, MP2, MP3 und MP4 realisiert. Dazu sind die Transistoren MP1, MP2, MP3 und MP4 als Strombank ausgelegt. Den Eingangsstrom der Strombank stellt die Konstantstromquelle IREF zur Verfügung. Die Konstantstromquelle IREF speist den Transistor MP1 über dessen Drain-Anschluss. Der Transistor MP1 ist der Eingangstransistor der Strombank. Der Drain-Anschluss des Transistors MP1 ist mit seinem Gate-Anschluss sowie den Gate-Anschlüssen der Transistoren MP2, MP3 und MP4 verbunden. Die Source-Anschlüsse der Transistoren MP1, MP2, MP3 und MP4 sind an eine Versorgungsspannung VDD gekoppelt. Ein Kondensator CB1 ist zwischen die Gate-Anschlüsse dieser Transistoren sowie die Versorgungsspannung VDD geschaltet. Der Transistor MP2 speist über seinen Drain-Anschluss den Knoten K1' mit dem Strom IOPP. Ebenso speist der Transistor MP3 bzw. MP4 den Knoten K4 bzw. K1 mit einem Strom ISGND bzw. dem Strom IOPN.

Die am Knoten K4 anliegende Signalmasse wird von dem Strom ISGND abgeleitet, welcher proportional zu dem von der Konstantstromquelle IREF erzeugten Strom ist. Daher ist ein relativ guter Gleichlauf des vorliegenden pseudo-differentiellen Leitungstreibers LT garantiert. Der Ausgangsstrom IOUTN durch den Transistor MN1 ergibt sich aus Gleichung (3). Die Übertragungsfunktion $A_i(s)$ im Frequenzbereich ist durch Gleichung (14) gegeben.

In Fig. 8 ist ein Schaltbild eines dritten Ausführungsbeispiels des erfindungsgemäßen pseudo-differentiellen Leitungstreibers LT dargestellt. Bei dem vorliegenden dritten Ausführungsbeispiel ist im Gegensatz zu dem in Fig. 7 gezeigten zweiten Ausführungsbeispiel der Arbeitspunkt geregelt. Dazu sind ein weiterer Transkonduktanzverstärker OTA2, weitere Konstantstromquellen IREFA und IREFA' sowie zwei unabhängige Stromspiegel, welche durch Transistoren MP5 und MP6 bzw. MP5' und MP6' gebildet sind, in die Schaltung implementiert.

Die Transistoren MP5 und MP6 des einen unabhängigen Stromspiegels sind an ihren Gate-Anschlüssen miteinander verbunden. Ihre Source-Anschlüsse sind mit der Versorgungsspannung VDD beaufschlagt. Der Transistor MP5 stellt den Eingangstransistor des Stromspiegels dar und wird an seinem Drain-Anschluss von der Konstantstromquelle IREFA gespeist. Der Transistor MP6 stellt über seinen Drain-Anschluss den Strom IOPN bereit. Des Weiteren speist der Transkonduktanzverstärker OTA2 ebenfalls den Eingang des Transistors MP5 mit einem Strom IOTA2. Der Transkonduktanzverstärker OTA2 erzeugt ausgangsseitig einen Strom IOTA2 derartiger Größe, dass die an dem Knoten K2 anliegende Spannung auf eine Referenzspannung VREF geregelt wird. Dazu ist der invertierende Eingang des Transkonduktanzverstärkers OTA2 mit dem Knoten K2 verbunden und sein nicht-invertierender Eingang ist mit der Referenzspannung VREF beaufschlagt. Analoges gilt für die Transistoren MP5' und MP6', die Konstantstromquelle IREFA' und einen Strom IOTA2'.

Als Vorteil des vorliegenden Ausführungsbeispiels ergibt sich, dass der Arbeitspunkt, d.h. der Strom 12 durch den Widerstand R2 und somit der Ausgangsstrom IOUTN durch den Transistor MN1 in den Terminierungswiderstand RL, geregelt wird. Das Potential am Knoten K2 ist somit unter Vernachlässigung eines eventuellen Offsets gleich der Referenzspannung VREF. Des Weiteren ist es von Vorteil, dass der Offset des Transkonduktanzverstärkers OTA1 und der daraus resultierende Fehlerstrom ausgeregelt werden.

Das Übertragungsverhalten im Frequenzbereich des Transkonduktanzverstärkers OTA2 sollte nach Gleichung (18) dimensioniert werden. Das Übertragungsverhalten muss einen dominanten Pol $\omega_{fb}$ aufweisen. Die Übertragungs-funktion des vorliegenden pseudo-differentiellen Leitungstreibers LT ist durch Gleichung (19) gegeben.

In Fig. 9 ist ein Schaltbild eines vierten Ausführungsbeispiels des erfindungsgemäßen pseudo-differentiellen Leitungstreibers LT gezeigt. Die vorliegende Schaltung basiert auf der in Fig. 7 dargestellten Schaltung des zweiten Ausführungsbeispiels. Zusätzlich speist bei der vorliegenden Schaltung ein Strom IOTA3 den Eingang des Transistors MP1. Der Strom IOTA3 wird von einem weiteren Transkonduktanzverstärker OTA3 erzeugt. Der Transkonduktanzverstärker OTA3 liegt mit seinem invertierenden Eingang an dem Knoten K4 an, in welchem durch den Strom ISGND die Signalmasse generiert wird. Der nicht-invertierende Eingang des Transkonduktanzverstärkers OTA3 ist mit der Referenzspannung VREF beaufschlagt.

Die vorstehend beschriebenen Schaltungsanordnung ermöglicht eine indirekte Regelung des Arbeitspunktes. Hierzu wird die Spannung am Knoten K4 mittels des Transkonduktanzverstärkers OTA3 mit der Referenzspannung VREF verglichen. Am Eingang der Strombank wird dem von der Konstantstromquelle IREF erzeugten Strom ein derartiger Strom IOTA3 überlagert, dass die Spannung am Knoten K4 den Wert der Referenzspannung annimmt.

Die in Fig. 9 gezeigte Schaltung ist besonders vorteilhaft bei sehr hohen Signalfrequenzen, da durch die indirekte Regelung des Arbeitspunktes zusätzliche parasitäre Lasten im Signalpfad unterdrückt werden. Derartige parasitäre Lasten im Signalfall könnten die Übertragungscharakteristik in ihrer Qualität einschränken.

Der Arbeitspunkt der vorliegenden Schaltung stellt sich nach Gleichung (3) ein. Die Übertragungsfunktion im Frequenzbereich ist durch Gleichung (14) gegeben.

In Fig. 10 ist ein Schaltbild eines fünften Ausführungsbeispiels des erfindungsgemäßen pseudo-differentiellen Leitungstreibers LT dargestellt. Die Ströme IOPN und IOPP werden hier wieder durch eine Strombank bereitgestellt, welche einen von der Konstantstromquelle IREF gespeisten Transistor MP7 zum Eingang und Transistoren MP8 und MP8' zum Ausgang hat. Der Strom IOPN bzw. IOPP speist in dem vorliegenden Ausführungsbeispiel allerdings nicht den Knoten K1 bzw. KI', sondern einen Knoten K6 bzw. K6' . ' Der Knoten K6 bzw. K6''ist über einen Widerstand R5 bzw. R5' mit dem Ausgang des Transkonduktanzverstärkers OTA1 verbunden. Zwischen den Knoten K1 bzw. K1' und den invertierenden Eingang des Transkonduktanzverstärkers OTA1 ist ein Kondensator CC1 bzw. CC1' geschaltet. Am nicht-invertierenden Eingang des Transkonduktanzverstärkers OTA1 liegt die Spannung VSGND an. Des Weiteren sind an die invertierenden Eingänge des Transkonduktanzverstärkers OTA1 Widerstände RC1 und RC1' gekoppelt. Die Widerstände RC1 und RC1' sind an ihren anderen Anschlüssen mit der Spannung VSGND beaufschlagt.

Der Knoten K6 bzw. K6' ist ferner mit dem Gate-Anschluss eines Transistors MN2 bzw. MN2' beschaltet. Am Source-Anschluss des Transistors MN2 bzw. MN2' liegt ein Widerstand R4 bzw. R4' gegen die Masse VSS an. Der Drain-Anschluss des Transistors MN2 bzw. MN2' ist mit seinem Gate-Anschluss verbunden. Des Weiteren liegt an dem Drain-Anschluss des Transistors MN2 bzw. MN2' ein Kondensator C4 bzw. C4' gegen die Masse VSS an.

Das vorliegende Ausführungsbeispiel kombiniert einen einfachen Stromspiegel zur Arbeitspunkteinstellung mit einem Shunt-Series-Feedback zur Stromverstärkung. Die Schaltung benötigt vorteilhafterweise keine Regelung des Arbeitspunktes mittels einer Rückkoppelschleife. Außerdem ist der Transkonduktanzverstärker OTA1 über eine AC-Kopplung aktiv.

Ohne ein am Eingang NIN anliegendes Signal bilden die Transistoren MN1 und MN2 gemeinsam einen degenerierten Stromspiegel. Als Degenerationswiderstände dienen hierbei die Widerstände R2 und R4. Als Grundstrom wird der von der Konstantstromquelle IREF erzeugte Strom über den aus den Transistoren MP7 und MP8 gebildeten Stromspiegel in den Knoten K6 gespiegelt. Der Knoten K6 ist der Eingang des aus den Transistoren MN1 und MN2 gebildeten degenerierten Stromspiegels. Der Strom IOPN fließt durch die Drain-Source-Strecke des Transistors MN2 und über den Widerstand R4 gegen die Masse VSS ab, sofern der durch den Widerstand R5 fließende Strom 15 gleich Null ist. Am Ausgang des Transkonduktanzverstärkers OTA1 stellt sich ein Potential gleich dem Potential am Knoten K6 ein. Der Strom durch den Transistor MN1 und den Widerstand R2 ergibt sich in Abhängigkeit von dem Quotient der Steilheiten der Transistoren MN1 und MN2. Das Übersetzungsverhältnis kann je nach Bedarf gewählt werden.

Bei einer Ansteuerung des Eingangs NIN mit einem Eingangsstrom IINN wirkt der AC-gekoppelte Transkonduktanzverstärker OTA1 mit den Widerständen R1 und R2 und dem Transistor MN1 als Shunt-Series-Feedback mit einer DC-Stromverstärkung gemäß Gleichung (3). Damit dabei kein zusätzlicher Strom in den Transistor MN2 fließt, ist der Referenzpfad des aus den Transistoren MN1 und MN2 gebildeten Stromspiegels über einen Tiefpass, welcher den Widerstand R5 und den Kondensator C4 aufweist, entkoppelt.

Die AC-Kopplung des Transkonduktanzverstärkers OTA1 mittels des Kondensators CC1 bzw. CC1' und des Widerstands RC1 bzw. RC1' führt zu einer zusätzlichen Nullstelle in der Übertragungsfunktion. Störsignale unterhalb der Frequenz der Nullstelle werden somit unterdrückt. Die Übertragungsfunktion der vorliegenden Schaltung im Frequenzbereich ist durch die Gleichung (20) gegeben.

**Patentansprüche**

1. Leitungstreiber zur Verstärkung eines Eingangsstroms (IINN; IINP) in einen Ausgangsstrom (IOUTN; IOUTP) mit einem Ansteuerverstärker (OTA1), einer spannungsgesteuerten Ausgabestromquelle (MN1; MN1'), einem Strom-Spannungs-Wandler, einem Spannungs-Strom-Wandler, einem ersten Knoten (K1; K1'), einem zweiten Knoten (K2; K2') und einem dritten Knoten (K3; K3'), wobei

   - der Eingangsstrom (IINN; IINP) in den ersten Knoten (K1; K1') einkoppelbar ist,
   - ein erster Verstärkereingang des Ansteuerverstärkers (OTA1) an den ersten Knoten (K1; K1') gekoppelt ist und ein zweiter Verstärkereingang des Ansteuerverstärkers (OTA1) im Wesentlichen mit einer Referenzspannung (VSGND) beaufschlagt ist,
   - der Strom-Spannungs-Wandler, welcher zwischen den ersten Knoten (K1; K1') und den zweiten Knoten (K2; K2') geschaltet ist, derart ausgelegt ist, dass er einen ersten Strom (I1; I1'), durch welchen der Strom-Spannungs-Wandler von dem ersten Knoten (K1; K1') gespeist wird, in eine am zweiten Knoten (K2; K2') anliegende Spannung (VK2; VK2') umwandelt,
   - der Spannungs-Strom-Wandler, welcher mit dem zweiten Knoten (K2; K2') verbunden ist, derart ausgelegt ist, dass er die am zweiten Knoten (K2; K2') anliegende Spannung (VK2; VK2') in einen zweiten Strom (I2; I2') umwandelt und den zweiten Strom (I2; I2') einer Stromsenke (VSS) zuführt, und der Leitungstreiber **dadurch gekennzeichnet ist, daß**
   - die spannungsgesteuerte Ausgabestromquelle (MN1; MN1') von dem Ansteuerverstärkers (OTA1) steuerbar ist und eine stromführende Strecke der spannungsgesteuerten Ausgabestromquelle (MN1; MN1') zwischen den zweiten Knoten (K2; K2') und den dritten Knoten (K3; K3') geschaltet ist,
- der Ausgangsstrom (IOUTN; IOUTP) aus dem dritten Knoten (K3; K3') auskoppelbar ist.

2. Leitungstreiber nach Anspruch 1,
   **dadurch gekennzeichnet,**

   - **dass** der Strom-Spannungs-Wandler ein erster Widerstand (R1; R1') ist, und
   - **dass** der Spannungs-Strom-Wandler ein zweiter Widerstand (R2; R2') ist, dessen einer erster Anschluss mit dem zweiten Knoten (K2; K2') verbunden ist und dessen einer zweiter Anschluss mit einem gemeinsamen festen Potential, insbesondere einer Masse (VSS), beaufschlagt ist.

3. Leitungstreiber nach Anspruch 1 oder 2,
   **dadurch gekennzeichnet,**

   - **dass** ein Steueranschluss der spannungsgesteuerten Ausgabestromquelle (MN1; MN1') mit einem Ausgang des Ansteuerverstärkers (OTA1) verbunden ist.

4. Leitungstreiber nach einem oder mehreren der vorhergehenden Ansprüche,
   **gekennzeichnet durch**

   - einen ersten Kondensator (C1; C1'), welcher zwischen den ersten Knoten (K1; K1') und den zweiten Knoten (K2; K2') geschaltet ist.

5. Leitungstreiber nach einem oder mehreren der Ansprüche 2 bis 4,
   **gekennzeichnet durch**

   - einen zweiten Kondensator (C2; C2'), dessen einer erster Anschluss an den zweiten Knoten (K2; K2') gekoppelt ist und dessen einer zweiter Anschluss mit dem gemeinsamen festen Potential, insbesondere der Masse (VSS), beaufschlagt ist.

6. Leitungstreiber nach einem oder mehreren der vorhergehenden Ansprüche,
   **dadurch gekennzeichnet,**

   - **dass** der Ansteuerverstärker ein Transkonduktanzverstärker (OTA1) ist, wobei insbesondere sein invertierender Eingang der erste Verstärkereingang und sein nicht-invertierender Eingang der zweite Verstärkereingang sind.

7. Leitungstreiber nach einem oder mehreren der vorhergehenden Ansprüche,
   **dadurch gekennzeichnet,**

   - **dass** die spannungsgesteuerte Ausgabestromquelle (MN1; MN1') einen MOS-Transistor, insbesondere einen n-Kanal-MOS-Transistor, aufweist.

8. Leitungstreiber nach einem oder mehreren der Ansprüche 2 bis 7,
   **dadurch gekennzeichnet,**

   - **dass** der erste Widerstand (MNA, MPA; MNA', MPA') und/oder der zweite Widerstand (MNB, MPB; MNB', MPB') durch Transistoren im Widerstandsbereich realisiert sind.

9. Leitungstreiber nach einem oder mehreren der Ansprüche 2 bis 8,
   **dadurch gekennzeichnet,**

   - **dass** der dritte Knoten (K3; K3') mit einem Anschluss eines Terminierungswiderstands (RL; RL') verbunden ist und ein zweiter Anschluss des Terminierungswiderstands (RL; RL') mit einem weiteren gemeinsamen festen Potential (VDDA) beaufschlagt ist.

10. Pseudo-differentieller Leitungstreiber (LT) zur Verstärkung eines differentiellen, einen ersten und einen zweiten Eingangsteilstrom (IINN, IINP) aufweisenden Gesamteingangsstroms in einen differentiellen, einen ersten und einen zweiten Ausgangsteilstrom (IOUTN, IOUTP) aufweisenden Gesamtausgangsstrom mit einem ersten und einem zweiten Leitungstreiber nach einem oder mehreren der vorhergehenden Ansprüche, wobei

- in den ersten Knoten (K1) des ersten Leitungstreibers der erste Eingangsteilstrom (IINN) und in den ersten Knoten. (K1') des zweiten Leitungstreibers der zweite Eingangsteilstrom (IINP) einkoppelbar sind,
- aus dem dritten Knoten (K3) des ersten Leitungstreibers der erste Ausgangsteilstrom (IOUTN) und aus dem dritten Knoten (K3') des zweiten Leitungstreibers der zweite Ausgangsteilstrom (IOUTP) auskoppelbar sind, und
- die Referenzspannungen (VSGND) des ersten und des zweiten Leitungstreibers den gleichen Wert aufweisen.

**11.** Pseudo-differentieller Leitungstreiber (LT) nach Anspruch 10,
**dadurch gekennzeichnet,**

- **dass** der erste Knoten (K1) des ersten Leitungstreibers von einer ersten steuerbaren Stromquelle (VCCS1) gespeist wird, und
- **dass** der erste Knoten (K1') des zweiten Leitungstreibers von einer zweiten steuerbaren Stromquelle (VCCS1') gespeist wird.

**12.** Pseudo-differentieller Leitungstreiber (LT) nach Anspruch 10 oder 11,
**dadurch gekennzeichnet,**

- **dass** die zweiten Verstärkereingänge der Ansteuerverstärker (OTA1) des ersten und des zweiten Leitungstreibers an einen vierten Knoten (K4), welcher von einer dritten steuerbaren Stromquelle (VCCS2) gespeist wird, gekoppelt sind, und
- **dass** aus dem von der dritten steuerbaren Stromquelle (VCCS2) bereitgestellten Strom die Referenzspannungen (VSGND) ableitbar sind.

**13.** Pseudo-differentieller Leitungstreiber (LT) nach Anspruch 12,
**gekennzeichnet durch**

- einen dritten Widerstand (R3), dessen einer erster Anschluss an den vierten Knoten (K4) gekoppelt ist und dessen einer zweiter Anschluss mit dem gemeinsamen festen Potential, insbesondere der Masse (VSS), beaufschlagt ist.

**14.** Pseudo-differentieller Leitungstreiber (LT) nach Anspruch 12 oder 13,
**gekennzeichnet durch**

- einen dritten Kondensator (C3), dessen einer erster Anschluss an den vierten Knoten (K4) gekoppelt ist und dessen einer zweiter Anschluss mit dem gemeinsamen festen Potential, insbesondere der Masse (VSS), beaufschlagt ist.

**15.** Pseudo-differentieller Leitungstreiber (LT) nach einem oder mehreren der Ansprüche 11 bis 14,
**dadurch gekennzeichnet,**

- **dass** die erste steuerbare Stromquelle (VCCS1) sowie die zweite steuerbare Stromquelle (VCCS1') und gegebenenfalls die dritte steuerbare Stromquelle (VCCS2) von einer Einheit (OPC) zur Arbeitspunkteinstellung oder Arbeitspunktregelung steuerbar sind.

**16.** Pseudo-differentieller Leitungstreiber (LT) nach Anspruch 15,
**dadurch gekennzeichnet,**

- **dass** die Einheit (OPC) zur Arbeitspunkteinstellung oder Arbeitspunktregelung von einer einstellbaren Konstantstromquelle (IREF) gespeist wird.

**17.** Pseudo-differentieller Leitungstreiber (LT) nach einem oder mehreren der Ansprüche 11 bis 16,
**dadurch gekennzeichnet,**

- **dass** die erste steuerbare Stromquelle (VCCS1) eine erste Stromspiegelschaltung (MP1, MP4) und die zweite steuerbare Stromquelle (VCCS1') eine zweite Stromspiegelschaltung (MP1, MP2) aufweisen.

18. Pseudo-differentieller Leitungstreiber (LT) nach Anspruch 17,
**dadurch gekennzeichnet,**

- **dass** der Eingangsstrom der ersten Stromspiegelschaltung (MP1, MP4) und der Eingangsstrom der zweiten Stromspiegelschaltung (MP1, MP2) von der einstellbaren Konstantstromquelle (IREF) bereitgestellt werden.

19. Pseudo-differentieller Leitungstreiber (LT) nach Anspruch 17 oder 18,
**dadurch gekennzeichnet,**

- **dass** die dritte steuerbare Stromquelle (VCCS2) eine dritte Stromspiegelschaltung (MP1, MP3) aufweist, deren Eingangsstrom insbesondere von der einstellbaren Konstantstromquelle (IREF) bereitgestellt wird.

20. Pseudo-differentieller Leitungstreiber (LT) nach Ansprüchen 17 und 19,
**dadurch gekennzeichnet,**

- **dass** die erste, die zweite und die dritte Stromspiegelschaltung einen gemeinsamen Eingangstransistor (MP1) aufweisen und insbesondere aus p-Kanal-MOS-Transistoren aufgebaut sind.

21. Pseudo-differentieller Leitungstreiber (LT) nach Anspruch 11,
**dadurch gekennzeichnet,**

- **dass** die erste steuerbare Stromquelle (VCCS1) eine erste Stromspiegelschaltung (MP5, MP6) aufweist, deren Eingangsstrom von einer ersten einstellbaren Konstantstromquelle (IREFA) und einer ersten Regelstromquelle (OTA2) bereitgestellt wird, und
- **dass** die zweite steuerbare Stromquelle (VCCS1') eine zweite Stromspiegelschaltung (MP5', MP6') aufweist, deren Eingangsstrom von einer zweiten einstellbaren Konstantstromquelle (IREFA') und einer zweiten Regelstromquelle (OTA2) bereitgestellt wird.

22. Pseudo-differentieller Leitungstreiber (LT) nach Anspruch 21,
**dadurch gekennzeichnet,**

- **dass** die erste Regelstromquelle einen ersten Operationsverstärker, welcher insbesondere ein Transkonduktanzverstärker (OTA2) ist, aufweist, wobei der Eingangsstrom der ersten Stromspiegelschaltung (MP5, MP6) von dem erstem Operationsverstärker derart steuerbar ist, dass an dem zweiten Knoten (K2) des ersten Leitungstreibers eine weitere Referenzspannung (VREF) anliegt, und
- **dass** die zweite Regelstromquelle einen zweiten Operationsverstärker, welcher insbesondere ein Transkonduktanzverstärker (OTA2) ist, aufweist, wobei der Eingangsstrom der zweiten Stromspiegelschaltung (MP5', MP6') von dem zweiten Operationsverstärker derart steuerbar ist, dass an dem zweiten Knoten (K2') des zweiten Leitungstreibers die weitere Referenzspannung (VREF) anliegt.

23. Pseudo-differentieller Leitungstreiber (LT) nach Anspruch 22,
**dadurch gekennzeichnet,**

- **dass** der invertierende Eingang des ersten Operationsverstärkers an den zweiten Knoten (K2) des ersten Leitungstreibers gekoppelt ist,
- **dass** der invertierende Eingang des zweiten Operationsverstärkers an den zweiten Knoten (K2') des zweiten Leitungstreibers gekoppelt ist,
- **dass** die nicht-invertierenden Eingänge des ersten und des zweiten Operationsverstärkers mit der weiteren Referenzspannung (VREF) beaufschlagt sind,
- **dass** der Ausgang des ersten Operationsverstärkers an den Eingang der ersten Stromspiegelschaltung (MP5, MP6) gekoppelt ist, und
- **dass** der Ausgang des zweiten Operationsverstärkers an den Eingang der zweiten Stromspiegelschaltung (MP5', MP6') gekoppelt ist.

24. Pseudo-differentieller Leitungstreiber (LT) nach einem oder mehreren der Ansprüche 12 bis 20,
**gekennzeichnet durch**

- einen Operationsverstärker (OTA3), welcher derart beschaltet ist, dass er die am vierten Knoten (K4) anliegende Spannung auf eine weitere Referenzspannung (VREF) regelt.

**25.** Pseudo-differentieller Leitungstreiber (LT) nach Ansprüchen 20 und 24,
**dadurch gekennzeichnet,**

- **dass** der Ausgang des Operationsverstärkers (OTA3) mit dem Eingang des gemeinsamen Eingangstransistors (MP1) verbunden ist.

**26.** Pseudo-differentieller Leitungstreiber (LT) nach Anspruch 25,
**dadurch gekennzeichnet,**

- **dass** der invertierende Eingang des Operationsverstärkers (OTA3) an den vierten Knoten (K4) gekoppelt ist, und
- **dass** der nicht-invertierende Eingang des Operationsverstärkers (OTA3) mit der weiteren Referenzspannung (VREF) beaufschlagt ist.

**27.** Pseudo-differentieller Leitungstreiber (LT) nach Anspruch 10,
**dadurch gekennzeichnet,**

- **dass** der erste Leitungstreiber eine erste steuerbare Stromquelle, einen ersten weiteren MOS-Transistor (MN2), einen dritten Widerstand (R4) und einen vierten Knoten (K6) aufweist, wobei
- die erste steuerbare Stromquelle den vierten Knoten (K6) speist,
- der Gate-Anschluss und ein erster Anschluss der Drain-Source-Strecke des ersten weiteren MOS-Transistors (MN2) an den vierten Knoten (K6) gekoppelt sind,
- der Ausgang des Ansteuerverstärkers (OTA1) des ersten Leitungstreibers an den vierten Knoten (K6) gekoppelt ist, und
- ein erster Anschluss des dritten Widerstands (R4) an einen zweiten Anschluss der Drain-Source-Strecke des ersten weiteren MOS-Transistors (MN2) gekoppelt ist und ein zweiter Anschluss des dritten Widerstands (R4) mit dem gemeinsamen festen Potential, insbesondere der Masse (VSS), beaufschlagt ist, und
- **dass** der zweite Leitungstreiber eine zweite steuerbare Stromquelle, einen zweiten weiteren MOS-Transistor (MN2'), einen vierten Widerstand (R4') und einen fünften Knoten (K6') aufweist, wobei
- die zweite steuerbare Stromquelle den fünften Knoten (K6') speist,
- der Gate-Anschluss und ein erster Anschluss der Drain-Source-Strecke des zweiten weiteren MOS-Transistors (MN2') an den fünften Knoten (K6') gekoppelt sind,
- der Ausgang des Ansteuerverstärkers (OTA1) des zweiten Leitungstreibers an den fünften Knoten (K6') gekoppelt ist, und
- ein erster Anschluss des vierten Widerstands (R4') an einen zweiten Anschluss der Drain-Source-Strecke des zweiten weiteren MOS-Transistors (MN2') gekoppelt ist und ein zweiter Anschluss des vierten Widerstands (R4') mit dem gemeinsamen festen Potential, insbesondere der Masse (VSS), beaufschlagt ist.

**28.** Pseudo-differentieller Leitungstreiber (LT) nach Anspruch 27,
**dadurch gekennzeichnet,**

- **dass** die erste steuerbare Stromquelle eine erste Stromspiegelschaltung (MP7, MP8) und die zweite steuerbare Stromquelle eine zweite Stromspiegelschaltung (MP7, MP8') aufweisen.

**29.** Pseudo-differentieller Leitungstreiber (LT) nach Anspruch 28,
**dadurch gekennzeichnet,**

- **dass** der Eingangsstrom der ersten Stromspiegelschaltung (MP7, MP8) und der Eingangsstrom der zweiten Stromspiegelschaltung (MP7, MP8') von einer einstellbaren Konstantstromquelle (IREF) bereitgestellt werden.

**30.** Pseudo-differentieller Leitungstreiber (LT) nach Anspruch 28 oder 29,
**dadurch gekennzeichnet,**

- **dass** die erste und die zweite Stromspiegelschaltung einen gemeinsamen Eingangstransistor (MP7) aufweisen und insbesondere aus p-Kanal-MOS-Transistoren aufgebaut sind.

**31.** Pseudo-differentieller Leitungstreiber (LT) nach einem oder mehreren der Ansprüche 27 bis 30,
**dadurch gekennzeichnet,**

- **dass** der erste weitere MOS-Transistor (MN2) und der zweite weitere MOS-Transistor (MN2') n-Kanal-MOS-Transistoren sind.

**32.** Pseudo-differentieller Leitungstreiber (LT) nach einem oder mehreren der Ansprüche 27 bis 31,
**dadurch gekennzeichnet,**

- **dass** zwischen den ersten Knoten (K1) des ersten Leitungstreibers und den ersten Verstärkereingang des Ansteuerverstärkers (OTA1) des ersten Leitungstreibers ein dritter Kondensator (CC1) geschaltet ist, und
- **dass** zwischen den ersten Knoten (K1') des zweiten Leitungstreibers und den ersten Verstärkereingang des Ansteuerverstärkers (OTA1) des zweiten Leitungstreibers ein vierter Kondensator (CC1') geschaltet ist.

**33.** Pseudo-differentieller Leitungstreiber (LT) nach Anspruch 32,
**dadurch gekennzeichnet,**

- **dass** zwischen den ersten und den zweiten Verstärkereingang des Ansteuerverstärkers (OTA1) des ersten Leitungstreibers ein fünfter Widerstand (RC1) geschaltet ist, und
- **dass** zwischen den ersten und den zweiten Verstärkereingang des Ansteuerverstärkers (OTA1) des zweiten Leitungstreibers ein sechster Widerstand (RC1') geschaltet ist.

**34.** Pseudo-differentieller Leitungstreiber (LT) nach einem oder mehreren der Ansprüche 27 bis 33,
**dadurch gekennzeichnet,**

- **dass** zwischen den vierten Knoten (K6) und den Ausgang des Ansteuerverstärkers (OTA1) des ersten Leitungstreibers ein erster Tiefpassfilter (R5, C4) geschaltet ist, und
- **dass** zwischen den.fünften Knoten (K6') und den Ausgang des Ansteuerverstärkers (OTA1) des zweiten Leitungstreibers ein zweiter Tiefpassfilter (R5', C4') geschaltet ist.

**35.** Pseudo-differentieller Leitungstreiber (LT) nach Anspruch 34,
**dadurch gekennzeichnet,**

- **dass** der erste Tiefpassfilter einen siebten Widerstand (R5) und einen fünften Kondensator (C4) aufweist, wobei
- der siebte Widerstand (R5) zwischen den vierten Knoten (K6) und den Ausgang des Ansteuerverstärkers (OTA1) des ersten Leitungstreibers geschaltet ist, und
- ein erster Anschluss des fünften Kondensators (C4) an den vierten Knoten (K6) gekoppelt ist und ein zweiter Anschluss des fünften Kondensators (C4) mit dem gemeinsamen festen Potential, insbesondere der Masse (VSS), beaufschlagt ist, und
- **dass** der zweite Tiefpassfilter einen achten Widerstand (R5') und einen sechsten Kondensator (C4') aufweist, wobei
- der achte Widerstand (R5') zwischen den fünften Knoten (K6') und den Ausgang des Ansteuerverstärkers (OTA1) des zweiten Leitungstreibers geschaltet ist, und
- ein erster Anschluss des sechsten Kondensators (C4') an den fünften Knoten (K6') gekoppelt ist und ein zweiter Anschluss des sechsten Kondensators (C4') mit dem gemeinsamen festen Potential, insbesondere der Masse (VSS), beaufschlagt ist.

**36.** Pseudo-differentieller Leitungstreiber (LT) nach einem oder mehreren der Ansprüche 10 bis 35,
**dadurch gekennzeichnet,**

- **dass** der pseudo-differentielle Leitungstreiber derart angepaßt ist, daß er zur Herstellung (LT) durch CMOS-Prozesse geeignet ist.

**Claims**

**1.** Line driver for amplifying an input current (IINN; IINP) into an output current (IOUTN; IOUTP) with a drive amplifier (OTA1), a voltage-controlled output current source (MN1; MN1'), a current/voltage converter, a voltage/current converter, a first node (K1; K1'), a second node (K2; K2') and a third node (K3; K3'), where

- the input current (IINN; IINP) can be injected into the first node (K1; K1'),
- a first amplifier input on the drive amplifier (OTA1) is coupled to the first node (K1; K1') and a second amplifier input on the drive amplifier (OTA1) essentially has a reference voltage (VSGND) applied to it,
- the current/voltage converter, which is connected between the first node (K1; K1') and the second node (K2; K2'), is designed such that it converts a first current (I1; I1'), which feeds the current/voltage converter from the first node (K1; K1'), into a voltage (VK2; VK2') which is present on the second node (K2; K2'),
- the voltage/current converter, which is connected to the second node (K2; K2'), is designed such that it converts the voltage (VK2; VK2') present on the second node (K2; K2') into a second current (I2; I2') and supplies the second current (I2; I2') to a current sink (VSS), and the line driver is **characterized in that**
- the voltage-controlled output current source (MN1; MN1') can be controlled by the drive amplifier (OTA1), and a current-carrying path in the voltage-controlled output current source (MN1; MN1') is connected between the second node (K2; K2') and the third node (K3; K3'),
- the output current (IOUTN; IOUTP) can be output from the third node (K3; K3').

2. Line driver according to Claim 1, **characterized**

- **in that** the current/voltage converter is a first resistor (R1; R1'), and
- **in that** the voltage/current converter is a second resistor (R2; R2'), whose first connection is connected to the second node (K2; K2') and whose second connection has a common fixed potential, particularly an earth (VSS), applied to it.

3. Line driver according to Claim 1 or 2, **characterized**

- **in that** a control connection on the voltage-controlled output current source (MN1; MN1') is connected to an output on the drive amplifier (OTA1).

4. Line driver according to one or more of the preceding claims, **characterized by**

- a first capacitor (C1; C1'), which is connected between the first node (K1; K1') and the second node (K2; K2').

5. Line driver according to one or more of Claims 2 to 4, **characterized by**

- a second capacitor (C2; C2'), whose first connection is coupled to the second node (K2; K2') and whose second connection has the common fixed potential, particularly the earth (VSS), applied to it.

6. Line driver according to one or more of the preceding claims, **characterized**

- **in that** the drive amplifier is a transconductance amplifier (OTA1), with, in particular, its inverting input being the first amplifier input and its noninverting input being the second amplifier input.

7. Line driver according to one or more of the preceding claims, **characterized**

- **in that** the voltage-controlled output current source (MN1; MN1') has a MOS transistor, particularly an n-channel MOS transistor.

8. Line driver according to one or more of Claims 2 to 7, **characterized**

- **in that** the first resistor (MNA, MPA; MNA', MPA') and/or the second resistor (MNB, MPB; MNB', MPB') are provided by transistors in the resistance domain.

9. Line driver according to one or more of Claims 2 to 8,
**characterized**

  - **in that** the third node (K3; K3') is connected to a connection on a terminating resistor (RL; RL') and a second connection on the terminating resistor (RL; RL') has a further common fixed potential (VDDA) applied to it.

10. Pseudo-differential line driver (LT) for amplifying a differential total input current, comprising a first and a second input current portion (IINN, IINP), into a differential total output current, comprising a first and a second output current portion (IOUTN, IOUTP), with a first and a second line driver according to one or more of the preceding claims, where

  - the first node (K1) of the first line driver can have the first input current portion (IINN) injected into it and the first node (K1') of the second line driver can have the second input current portion (IINP) injected into it,
  - the third node (K3) of the first line driver can output the first output current portion (IOUTN) and the third node (K3') of the second line driver can output the second output current portion (IOUTP), and
  - the reference voltages (VSGND) of the first and second line drivers have the same value.

11. Pseudo-differential line driver (LT) according to Claim 10,
**characterized**

  - **in that** the first node (K1) of the first line driver is fed by a first controllable current source (VCCS1), and
  - **in that** the first node (K1') of the second line driver is fed by a second controllable current source (VCCS1').

12. Pseudo-differential line driver (LT) according to Claim 10 or 11,
**characterized**

  - **in that** the second amplifier inputs of the drive amplifiers (OTA1) on the first and second line drivers are coupled to a fourth node (K4), which is fed by a third controllable current source (VCCS2), and
  - **in that** the reference voltages (VSGND) can be derived from the current provided by the third controllable current source (VCCS2).

13. Pseudo-differential line driver (LT) according to Claim 12,
**characterized by**

  - a third resistor (R3), whose first connection is coupled to the fourth node (K4) and whose second connection has the common fixed potential, particularly the earth (VSS), applied to it.

14. Pseudo-differential line driver (LT) according to Claim 12 or 13,
**characterized by**

  - a third capacitor (C3), whose first connection is coupled to the fourth node (K4) and whose second connection has the common fixed potential, particularly the earth (VSS), applied to it.

15. Pseudo-differential line driver (LT) according to one or more of Claims 11 to 14,
**characterized**

  - **in that** the first controllable current source (VCCS1) and the second controllable current source (VCCS1') and possibly the third controllable current source (VCCS2) can be controlled by a unit (OPC) for operating-point adjustment or operating-point regulation.

16. Pseudo-differential line driver (LT) according to Claim 15,
**characterized**

  - **in that** the unit (OPC) for operating-point adjustment or operating-point regulation is fed by an adjustable constant current source (IREF).

17. Pseudo-differential line driver (LT) according to one or more of Claims 11 to 16,
**characterized**

- **in that** the first controllable current source (VCCS1) has a first current mirror circuit (MP1, MP4) and the second controllable current source (VCCS1') has a second current mirror circuit (MP1, MP2).

18. Pseudo-differential line driver (LT) according to Claim 17,
   **characterized**

      - **in that** the input current for the first current mirror circuit (MP1, MP4) and the input current for the second current mirror circuit (MP1, MP2) are provided by the adjustable constant current source (IREF).

19. Pseudo-differential line driver (LT) according to Claim 17 or 18,
   **characterized**

      - **in that** the third controllable current source (VCCS2) has a third current mirror circuit (MP1, MP3), whose input current is provided by the adjustable constant current source (IREF), in particular.

20. Pseudo-differential line driver (LT) according to Claims 17 and 19,
   **characterized**

      - **in that** the first, second and third current mirror circuits have a common input transistor (MP1) and, in particular, are designed from p-channel MOS transistors.

21. Pseudo-differential line driver (LT) according to Claim 11,
   **characterized**

      - **in that** the first controllable current source (VCCS1) has a first current mirror circuit (MP5, MP6), whose input current is provided by a first adjustable constant current source (IREFA) and a first regulating current source (OTA2), and
      - **in that** the second controllable current source (VCCS1') has a second current mirror circuit (MP5', MP6'), whose input current is provided by a second adjustable constant current source (IREFA') and a second regulating current source (OTA2).

22. Pseudo-differential line driver (LT) according to Claim 21,
   **characterized**

      - **in that** the first regulating current source has a first operational amplifier, which is a transconductance amplifier (OTA2), in particular, with the input current for the first current mirror circuit (MP5, MP6) being able to be controlled by the first operational amplifier such that the second node (K2) of the first line driver is at a further reference voltage (VREF), and
      - **in that** the second regulating current source has a second operational amplifier, which is a transconductance amplifier (OTA2), in particular, with the input current for the second current mirror circuit (MP5', MP6') being able to be controlled by the second operational amplifier such that the second node (K2') of the second line driver is at the further reference voltage (VREF).

23. Pseudo-differential line driver (LT) according to Claim 22,
   **characterized**

      - **in that** the inverting input of the first operational amplifier is coupled to the second node (K2) of the first line driver,
      - **in that** the inverting input of the second operational amplifier is coupled to the second node (K2') of the second line driver,
      - **in that** the noninverting inputs of the first and second operational amplifiers have the further reference voltage (VREF) applied to them,
      - **in that** the output of the first operational amplifier is coupled to the input of the first current mirror circuit (MP5, MP6), and
      - **in that** the output of the second operational amplifier is coupled to the input of the second current mirror circuit (MP5', MP6').

24. Pseudo-differential line driver (LT) according to one or more of Claims 12 to 20,

**characterized by**

- an operational amplifier (OTA3) which is connected up such that it regulates the voltage present on the fourth node (K4) to a further reference voltage (VREF).

25. Pseudo-differential line driver (LT) according to Claims 20 and 24,
**characterized**

- **in that** the output of the operational amplifier (OTA3) is connected to the input of the common input transistor (MP1).

26. Pseudo-differential line driver (LT) according to Claim 25,
**characterized**

- **in that** the inverting input of the operational amplifier (OTA3) is coupled to the fourth node (K4), and
- **in that** the noninverting input of the operational amplifier (OTA3) has the further reference voltage (VREF) applied to it.

27. Pseudo-differential line driver (LT) according to Claim 10,
**characterized**

- **in that** the first line driver has a first controllable current source, a first further MOS transistor (MN2), a third resistor (R4) and a fourth node (K6), where
- the first controllable current source feeds the fourth node (K6),
- the gate connection and a first connection on the drain/source path in the first further MOS transistor (MN2) are coupled to the fourth node (K6),
- the output of the drive amplifier (OTA1) in the first line driver is coupled to the fourth node (K6), and
- a first connection on the third resistor (R4) is coupled to a second connection on the drain/source path in the first further MOS transistor (MN2), and a second connection on the third resistor (R4) has the common fixed potential, particularly the earth (VSS), applied to it, and
- **in that** the second line driver has a second controllable current source, a second further MOS transistor (MN2'), a fourth resistor (R4') and a fifth node (K6'), where
- the second controllable current source feeds the fifth node (K6'),
- the gate connection and a first connection on the drain/source path in the second further MOS transistor (MN2') are coupled to the fifth node (K6'),
- the output of the drive amplifier (OTA1) in the second line driver is coupled to the fifth node (K6'), and
- a first connection on the fourth resistor (R4') is coupled to a second connection on the drain/source path in the second further MOS transistor (MN2'), and a second connection on the fourth resistor (R4') has the common fixed potential, particularly the earth (VSS), applied to it.

28. Pseudo-differential line driver (LT) according to Claim 27,
**characterized**

- **in that** the first controllable current source has a first current mirror circuit (MP7, MP8) and the second controllable current source has a second current mirror circuit (MP7, MP8').

29. Pseudo-differential line driver (LT) according to Claim 28,
**characterized**

- **in that** the input current for the first current mirror circuit (MP7, MP8) and the input current for the second current mirror circuit (MP7, MP8') are provided by an adjustable constant current source (IREF).

30. Pseudo-differential line driver (LT) according to Claim 28 or 29,
**characterized**

- **in that** the first and second current mirror circuits have a common input transistor (MP7) and, in particular, are designed from p-channel MOS transistors.

**31.** Pseudo-differential line driver (LT) according to one or more of Claims 27 to 30, **characterized**

- **in that** the first further MOS transistor (MN2) and the second further MOS transistor (MN2') are n-channel MOS transistors.

**32.** Pseudo-differential line driver (LT) according to one or more of Claims 27 to 31, **characterized**

- **in that** a third capacitor (CC1) is connected between the first node (K1) of the first line driver and the first amplifier input of the drive amplifier (OTA1) in the first line driver, and
- **in that** a fourth capacitor (CC1') is connected between the first node (K1') of the second line driver and the first amplifier input of the drive amplifier (OTA1) in the second line driver.

**33.** Pseudo-differential line driver (LT) according to Claim 32, **characterized**

- **in that** a fifth resistor (RC1) is connected between the first and second amplifier inputs of the drive amplifier (OTA1) in the first line driver, and
- **in that** a sixth resistor (RC1') is connected between the first and second amplifier inputs of the drive amplifier (OTA1) in the second line driver.

**34.** Pseudo-differential line driver (LT) according to one or more of Claims 27 to 33, **characterized**

- **in that** a first low-pass filter (R5, C4) is connected between the fourth node (K6) and the output of the drive amplifier (OTA1) in the first line driver, and
- **in that** a second low-pass filter (R5', C4') is connected between the fifth node (K6') and the output of the drive amplifier (OTA1) in the second line driver.

**35.** Pseudo-differential line driver (LT) according to Claim 34, **characterized**

- **in that** the first low-pass filter has a seventh resistor (R5) and a fifth capacitor (C4), where
- the seventh resistor (R5) is connected between the fourth node (K6) and the output of the drive amplifier (OTA1) in the first line driver, and
- a first connection on the fifth capacitor (C4) is coupled to the fourth node (K6) and a second connection on the fifth capacitor (C4) has the common fixed potential, particularly the earth (VSS), applied to it, and
- **in that** the second low-pass filter has an eighth resistor (R5') and a sixth capacitor (C4'), where
- the eighth resistor (R5') is connected between the fifth node (K6') and the output of the drive amplifier (OTA1) in a second line driver, and
- a first connection on the sixth capacitor (C4') is coupled to the fifth node (K6') and a second connection on the sixth capacitor (C4') has the common fixed potential, particularly the earth (VSS), applied to it.

**36.** Pseudo-differential line driver (LT) according to one or more of Claims 10 to 35, **characterized**

- **in that** Pseudo-differential line driver (LT) is adapted such that it is suitable for production using CMOS processes.

**Revendications**

**1.** Circuit d'attaque de ligne pour amplifier un courant (IINN ; IINP) d'entrée en un courant (IOUTN ; IOUTP) de sortie comprenant un amplificateur (OTA1) de commande, une source (MN1 ; MN1') de courant de sortie commandée par la tension, un convertisseur courant-tension, un convertisseur tension-courant, un premier point (K1 ; K1') nodal, un deuxième point (K2 ; K2') nodal et un troisième point (K3 ; K3') nodal, dans lequel

- le courant (IINN ; IINP) d'entrée peut être injecté dans le premier point (K1 ; K1') nodal ;

- une première entrée de l'amplificateur (OTA1) de commande est couplée au premier point (K1 ; K1') nodal et une tension (VSGND) de référence est appliquée sensiblement à une deuxième entrée de l'amplificateur (OTA1) de commande ;
- le convertisseur courant-tension, qui est monté entre le premier point (K1 ; K1') nodal et le deuxième point (K2 ; K2') nodal, est tel qu'il transforme un premier courant (I1 ; I1') par lequel le convertisseur courant-tension est alimenté par le premier point (K1 ; K1') nodal en une tension (VK2 ; VK2') s'appliquant au deuxième point (K2 ; K2') nodal ;
- le convertisseur tension-courant, qui est relié au deuxième point (K2 ; K2') nodal, est tel qu'il transforme la tension (VK2 ; VK2') appliquée au deuxième point (K2 ; K2') nodal en un deuxième courant (I2 ; I2') et envoie le deuxième courant (I2 ; I2') à un puits (VSS) de courant ; et le circuit d'attaque de ligne est **caractérisé en ce que**
- la source (MN1 ; MN1') de courant de sortie commandée par la tension peut être commandée par l'amplificateur (OTA1) de commande et une section de passage du courant de la source (MN1 ; MN1') de courant de sortie commandée par la tension est montée entre le deuxième point (K2 ; K2') nodal et le troisième point (K3 ; K3') nodal ;
- le courant (IOUTN ; IOUTP) de sortie peut sortir du troisième point (K3 ; K3') nodal.

2. Circuit d'attaque de ligne suivant la revendication 1, **caractérisé**

   - **en ce que** le convertisseur courant-tension est une première résistance (R1 ; R1') ; et
   - **en ce que** le convertisseur tension-courant est une deuxième résistance (R2 ; R2') dont une première borne est reliée au deuxième point (K2 ; K2') nodal et dont une deuxième borne est alimentée par un potentiel fixe commun, notamment par une masse (VSS).

3. Circuit d'attaque de ligne suivant la revendication 1 ou 2, **caractérisé**

   - **en ce qu'**une borne de commande de la source (MN1 ; MN1') de courant de sortie commandée par la tension est reliée à une sortie de l'amplificateur (OTA1) de commande.

4. Circuit d'attaque suivant l'une ou plusieurs des revendications précédentes, **caractérisé par**

   - un premier condensateur (C1 ; C1') qui est monté entre le premier point (K1 ; K1') nodal et le deuxième point (K2 ; K2') nodal.

5. Circuit d'attaque suivant l'une ou plusieurs des revendications 2 à 4, **caractérisé par**

   - un deuxième condensateur (C2 ; C2') dont une première borne est couplée au deuxième point (K2 ; K2') nodal et à la deuxième borne duquel s'applique le potentiel fixe commun, notamment la masse (VSS).

6. Circuit d'attaque suivant l'une ou plusieurs des revendications précédentes, **caractérisé**

   - **en ce que** l'amplificateur de commande est un amplificateur (OTA1) de transconductance, dans lequel, notamment, son entrée inverseuse est la première entrée de l'amplificateur et son entrée non-inverseuse est la deuxième entrée d'amplificateur.

7. Circuit d'attaque suivant l'une ou plusieurs des revendications précédentes, **caractérisé**

   - **en ce que** la source (MN1 ; MN1') de courant de sortie commandée par la tension comporte un transistor MOS, notamment un transistor MOS à canal n.

8. Circuit d'attaque suivant l'une ou plusieurs des revendications 2 à 7, **caractérisé**

   - **en ce que** la première résistance (MNA, MPA ; MNA', MPA') et/ou la deuxième résistance (MNB, MPB ; MNB', MPB') sont réalisées par des transistors dans le domaine résistant.

9. Circuit d'attaque suivant l'une ou plusieurs des revendications 2 à 8, **caractérisé**

   - **en ce que** le troisième point (K3 ; K3') nodal est relié à une borne d'une résistance (RL ; RL') de terminaison et un autre potentiel (VDDA) fixe commun est appliqué à une deuxième borne de la résistance (RL ; RL') de terminaison.

**10.** Circuit (LT) d'attaque de ligne pseudodifférentiel pour l'amplification d'un courant d'entrée global différentiel ayant un premier et un deuxième sous-courants (IINN ; IINP) d'entrée en un courant de sortie global différentiel ayant un premier et un deuxième sous-courants (IOUTN ; IOUTP) de sortie, comprenant un premier et un deuxième circuits d'attaque de ligne suivant l'une ou plusieurs des revendications précédentes, dans lequel

- le premier sous-courant (IINN) d'entrée peut être injecté dans le premier point (K1) nodal du premier circuit d'attaque de ligne et le deuxième sous-courant (IINP) d'entrée dans le premier point (K1') nodal du deuxième circuit d'attaque de ligne ;
- le premier sous-courant (IOUTN) de sortie peut sortir du troisième point (K3) nodal du premier circuit d'attaque de ligne et le deuxième sous-courant (IOUTP) de sortie du troisième point (K3') nodal du deuxième circuit d'attaque de ligne ; et
- les tensions (VSGND) de référence du premier et deuxième circuits d'attaque de ligne ont la même valeur.

**11.** Circuit (LT) d'attaque de ligne pseudodifférentiel suivant la revendication 10,
**caractérisé**

- **en ce que** le premier point (K1) nodal du premier circuit d'attaque de ligne est alimenté par une première source (VCCS1) de courant qui peut être réglée; et
- **en ce que** le premier point (K1') nodal du deuxième circuit d'attaque de ligne est alimenté par une deuxième source (VCCS1') de courant qui peut être réglée.

**12.** Circuit (LT) d'attaque de ligne pseudodifférentiel suivant la revendication 10 ou 11,
**caractérisé**

- **en ce que** les deuxièmes entrées de l'amplificateur (OTA1) de commande du premier et du deuxième circuits d'attaque de ligne sont couplées à un quatrième point (K4) nodal qui est alimenté par une troisième source (VCCS2) de courant qui peut être commandée ; et
- **en ce que** les tensions (VSGND) de référence peuvent être dérivées du courant mis à disposition par la troisième source (VCCS2) de courant qui peut être réglée.

**13.** Circuit (LT) d'attaque de ligne pseudodifférentiel suivant la revendication 12,
**caractérisé par**

- une troisième résistance (R3) dont une première borne est couplée au quatrième point (K4) nodal et il est appliqué à sa deuxième borne un potentiel fixe commun, notamment la masse (VSS).

**14.** Circuit (LT) d'attaque de ligne pseudodifférentiel suivant la revendication 12 ou 13,
**caractérisé par**

- un troisième condensateur (C3) dont une première borne est couplée au quatrième point (K4) nodal et à une deuxième borne duquel est appliqué le potentiel fixe commun, notamment la masse (VSS).

**15.** Circuit (LT) d'attaque de ligne pseudodifférentiel suivant l'une ou plusieurs des revendications 11 à 14,
**caractérisé**

- **en ce que** la première source (VCCS1) de courant qui peut être commandée ainsi que la deuxième source (VCCS1') de courant qui peut réglée et le cas échéant la troisième source (VCCS2) de courant qui peut être commandée peuvent être commandées par une unité (OPC) d'établissement du point de travail ou de régulation du point de travail.

**16.** Circuit (LT) d'attaque de ligne pseudodifférentiel suivant la revendication 15,
**caractérisé**

- **en ce que** l'unité (OPC) d'établissement du point de travail ou de régulation du point de travail est alimentée par une source (IREF) de courant constant qui peut être réglée.

**17.** Circuit (LT) d'attaque de ligne pseudodifférentiel suivant l'une ou plusieurs des revendications 11 à 16, **caractérisé**

- **en ce que** la première source (VCCS1) de courant qui peut être commandée a un premier circuit (MP1 ; MP4) de miroir de courant et la deuxième source (VCCS1') de courant qui peut être réglée à un deuxième circuit (MP1 ; MP2) de miroir de courant.

**18.** Circuit (LT) d'attaque de ligne pseudodifférentiel suivant la revendication 17, **caractérisé**

- **en ce que** le courant d'entrée du premier circuit (MP1 ; MP4) de miroir de courant et le courant d'entrée du deuxième circuit (MP1 ; MP2) de miroir de courant sont mis à disposition par la source (IREF) de courant constant qui peut être réglée.

**19.** Circuit (LT) d'attaque de ligne pseudodifférentiel suivant la revendication 17 ou 18, **caractérisé**

- **en ce que** la troisième source (VCCS2) de courant qui peut être commandée a un troisième circuit (MP1 ; MP3) de miroir de courant dont le courant d'entrée est mis à disposition, notamment par la source (IREF) de courant constant qui peut être réglée.

**20.** Circuit (LT) d'attaque de ligne pseudodifférentiel suivant les revendications 17 et 19, **caractérisé**

- **en ce que** le premier, le deuxième et le troisième circuits de miroir de courant ont un transistor (MP1) d'entrée commun et sont constitués notamment de transistors MOS à canal p.

**21.** Circuit (LT) d'attaque de ligne pseudodifférentiel suivant la revendication 11, **caractérisé**

- **en ce que** la première source (VCCS1) de courant qui peut être commandée a un premier circuit (MP5 ; MP6) de miroir de courant dont le courant d'entrée est mis à disposition par une première source (IREFA) de courant constant pouvant être réglée et par une première source (OTA2) de courant de réglage ; et
- **en ce que** la deuxième source (VCCS1') de courant qui peut être commandée à un deuxième circuit (MP5' ; MP6') de miroir de courant dont le courant d'entrée est mis à disposition par une deuxième source (IREFA') de courant constant pouvant être réglée et par une deuxième source (OTA2) de courant de réglage.

**22.** Circuit (LT) d'attaque de ligne pseudodifférentiel suivant la revendication 21, **caractérisé**

- **en ce que** la première source de courant de réglage a un premier amplificateur opérationnel qui est notamment un amplificateur (OTA2) de transconductance, le courant d'entrée du premier circuit (MP5 ; MP6) de miroir de courant pouvant être commandé par le premier amplificateur opérationnel de façon à appliquer une tension (VREF) de référence supplémentaire au deuxième point (K2) nodal du premier circuit d'attaque de ligne ; et
- **en ce que** la deuxième source de courant de réglage a un deuxième amplificateur opérationnel qui est notamment un amplificateur (OTA2) de transconductance, le courant d'entrée du deuxième circuit (MP5' ; MP6') de miroir de courant pouvant être commandé par le deuxième amplificateur opérationnel de façon à appliquer une tension (VREF) de référence supplémentaire au deuxième point (K2') nodal du deuxième circuit d'attaque de ligne

**23.** Circuit (LT) d'attaque de ligne pseudodifférentiel suivant la revendication 22, **caractérisé**

- **en ce que** l'entrée inverseuse du premier amplificateur opérationnel est couplée au deuxième point (K2) nodal du premier circuit d'attaque de ligne ;
- **en ce que** l'entrée inverseuse du deuxième amplificateur opérationnel est couplée au deuxième point (K2') nodal du deuxième circuit d'attaque de ligne ;
- **en ce que** la tension (VREF) de référence supplémentaire est appliquée aux entrées non inverseuses du premier et du deuxième amplificateurs opérationnels ;
- **en ce que** la sortie du premier amplificateur opérationnel est couplée à l'entrée du premier circuit (MP5 ; MP6) de miroir de courant ; et
- **en ce que** la sortie du deuxième amplificateur opérationnel est couplée à l'entrée du deuxième circuit (MP5' ; MP6') de miroir de courant.

**24.** Circuit (LT) d'attaque de ligne pseudodifférentiel suivant l'une ou plusieurs des revendications 12 à 20, **caractérisé par**

- un amplificateur (OTA3) opérationnel qui est monté de manière à ce qu'il règle la tension appliquée au quatrième point (K4) nodal sur une tension (VREF) de référence supplémentaire.

**25.** Circuit (LT) d'attaque de ligne pseudodifférentiel suivant les revendications 20 et 25, **caractérisé**

- **en ce que** la sortie de l'amplificateur (OTA3) opérationnel est reliée à l'entrée du transistor (MP1) d'entrée commun.

**26.** Circuit (LT) d'attaque de ligne pseudodifférentiel suivant la revendication 25, **caractérisé**

- **en ce que** l'entrée inverseuse de l'amplificateur (OTA3) opérationnel est couplée au quatrième point (K4) nodal ; et
- **en ce que** la tension (VREF) de référence supplémentaire est appliquée à l'entrée non-inverseuse de l'amplificateur (OTA3) opérationnel.

**27.** Circuit (LT) d'attaque de ligne pseudodifférentiel suivant la revendication 10, **caractérisé**

- **en ce que** le premier circuit d'attaque de ligne a une première source de courant pouvant être commandée, un premier transistor (MN2) MOS supplémentaire, une troisième résistance (R4) et un quatrième point (K6) nodal, dans lequel
- la première source de courant pouvant être commandée alimente le quatrième point (K6) nodal ;
- la borne de grille et une première borne de la section source-drain du premier transistor (MN2) MOS supplémentaire sont couplées au quatrième point (K6) nodal ;
- la sortie de l'amplificateur (OTA1) de commande du premier circuit d'attaque de ligne est couplée au quatrième point (K6) nodal ; et
- une première borne de la troisième résistance (R4) est couplée à une deuxième borne de la section de drain-source du premier transistor (MN2) MOS supplémentaire et le potentiel fixe commun, notamment la masse (VSS), est appliqué à une deuxième borne de la troisième résistance (R4) ; et
- **en ce que** le deuxième circuit d'attaque de ligne a une deuxième source de courant pouvant être commandée, un deuxième transistor (MN2') MOS supplémentaire, une quatrième résistance (R4') et un cinquième point (K6') nodal, dans lequel
- la deuxième source de courant pouvant être réglée alimente le cinquième point (K6') nodal ;
- la borne de grille et une première borne de la section source-drain du deuxième transistor (MN2') MOS supplémentaire sont couplées au cinquième point (K6') nodal ;
- la sortie de l'amplificateur (OTA1) de commande du deuxième circuit d'attaque de ligne est couplée au cinquième point (K6') nodal ; et
- une première borne de la quatrième résistance (R4') est couplée à une deuxième borne de la section de drain-source du deuxième transistor (MN2') MOS supplémentaire et le potentiel fixe commun, notamment la masse (VSS), est appliqué à une deuxième borne de la quatrième résistance (R4').

**28.** Circuit (LT) d'attaque de ligne pseudodifférentiel suivant la revendication 27, **caractérisé**

- **en ce que** la première source de courant qui peut être commandée a un premier circuit (MP7 ; MP8) de miroir de courant et la deuxième source de courant qui peut être commandée a un deuxième circuit (MP7' ; MP8') de miroir de courant.

**29.** Circuit (LT) d'attaque de ligne pseudodifférentiel suivant la revendication 28, **caractérisé**

- **en ce que** le courant d'entrée du premier circuit (MP7 ; MP8) de miroir de courant et le courant d'entrée du deuxième circuit (MP7' ; MP8') de miroir de courant sont mis à disposition par une source (IREF) de courant constant qui peut être réglée.

**30.** Circuit (LT) d'attaque de ligne pseudodifférentiel suivant la revendication 28 ou 29, **caractérisé**

- **en ce que** le premier et le deuxième circuits de miroir de courant ont un transistor (MP7) d'entrée commun et sont constitués notamment de transistors MOS à canal p.

**31.** Circuit (LT) d'attaque de ligne pseudodifférentiel suivant l'une ou plusieurs des revendications 27 à 30, **caractérisé**

- **en ce que** le premier transistor (MN2) MOS supplémentaire et le deuxième transistor (MN2') MOS supplémentaire sont des transistors MOS à canal n.

**32.** Circuit (LT) d'attaque de ligne pseudodifférentiel suivant l'une ou plusieurs des revendications 27 à 31, **caractérisé**

- **en ce qu'**un troisième condensateur (CC1) est monté entre le premier point (K1) nodal du premier circuit d'attaque de ligne et la première entrée de l'amplificateur (OTA1) de commande du premier circuit d'attaque de ligne ; et
- **en ce qu'**un quatrième condensateur (CC1') est monté entre le premier point (K1') nodal du deuxième circuit d'attaque de ligne et la première entrée de l'amplificateur (OTA1) de commande du deuxième circuit d'attaque de ligne.

**33.** Circuit (LT) d'attaque de ligne pseudodifférentiel suivant la revendication 32, **caractérisé**

- **en ce qu'**une cinquième résistance (RC1) est montée entre la première et la deuxième entrée de l'amplificateur "OTA1) de commande du premier circuit d'attaque de ligne ; et
- **en ce qu'**une sixième résistance (RC1') est montée entre la première et la deuxième entrée de l'amplificateur '(OTA1) de commande du deuxième circuit d'attaque de ligne.

**34.** Circuit (LT) d'attaque de ligne pseudodifférentiel suivant l'une ou plusieurs des revendications 27 à 33, **caractérisé**

- **en ce qu'**un premier filtre (R5, C4) passe-bas est monté entre le quatrième point (K6) nodal et la sortie de l'amplificateur (OTA1) de commande du premier circuit d'attaque de ligne ; et
- **en ce qu'**un deuxième filtre (R5', C4') passe-bas est monté entre le cinquième point (K6') nodal et la sortie de l'amplificateur (OTA1) de commande du deuxième circuit d'attaque de ligne.

**35.** Circuit (LT) d'attaque de ligne pseudodifférentiel suivant la revendication 34, **caractérisé**

- **en ce que** le premier filtre passe-bas a une septième résistance (R5) et un cinquième condensateur (C4), dans lequel
- la septième résistance (R5) est montée entre le quatrième point (K6) nodal et la sortie de l'amplificateur (OTA1) de commande du premier circuit d'attaque de ligne ; et
- une première borne du cinquième condensateur (C4) est couplée au quatrième point (K6) nodal et le potentiel fixe commun, notamment la masse (VSS), est appliqué à une deuxième borne du cinquième condensateur (C4) ; et
- **en ce que** le deuxième filtre passe-bas a une huitième résistance (R5') et un sixième condensateur (C4'), dans lequel
- la huitième résistance (R5') est montée entre le cinquième point (K6') nodal et la sortie de l'amplificateur (OTA1) de commande du deuxième circuit d'attaque de ligne ; et

- une première borne du sixième condensateur (C4') est couplée au cinquième point (K6') nodal et le potentiel fixe commun, notamment la masse (VSS), est appliqué à une deuxième entrée du sixième condensateur (C4').

36. Circuit (LT) d'attaque de ligne pseudodifférentiel suivant l'une ou plusieurs des revendications 10 à 35, **caractérisé**

- **en ce que** le circuit (LT) d'attaque de ligne pseudodifférentiel est tel qu'il est approprié à la production de processus CMOS.

Fig. 1
Stand der Technik

Fig. 2

Fig. 3

EP 1 407 586 B1

Fig. 5

Fig. 4

Fig. 6

Fig. 7

Fig. 8

Fig. 9

EP 1 407 586 B1

Fig. 10.

EP 1 407 586 B1